# EUROPEAN PATENT APPLICATION

(11) **EP 4 571 505 A1**
(43) Date of publication of application: **18.06.2025**
(21) Application number: 22955084.3
(22) Date of filing: 11.08.2022
(51) Int. Cl.: G06F 9/455, G06F 9/50, G06F 9/30, B60K 35/00

(54) **SIGNAL PROCESSING DEVICE, AND VEHICLE DISPLAY DEVICE COMPRISING SAME**

(71) Applicant: LG Electronics Inc., Yeongdeungpo-gu Seoul 07336 (KR)
(72) Inventor: JEONG, Sangkyeong, Seoul 06772 (KR); SHIN, Kyungjun, Seoul 06772 (KR); OH, Soohwan, Seoul 06772 (KR); YU, Ganghee, Seoul 06772 (KR); LEE, Jaeung, Seoul 06772 (KR)
(74) Representative: Vossius & Partner Patentanwälte Rechtsanwälte mbB
(86) International application number: PCT/KR2022/012029
(87) International publication number: WO 2024/034709

(57) **Abstract**

A signal processing device and a display apparatus for vehicles including the same are disclosed. The signal processing device includes a processor and a graphics processor configured to perform signal processing for a display mounted in a vehicle, wherein the processor is configured to execute a server virtual machine and a plurality of guest virtual machines on a hypervisor in the processor, and is configured to execute a workload balance server to control display off, frame rate variation, or image resolution variation based on workload data received from the plurality of guest virtual machines. Accordingly, the signal processing device can be utilized efficiently.

## Description

### BACKGROUND

### 1. Field

The present disclosure relates to a signal processing device and a display apparatus for vehicles including the same, and more particularly to a signal processing device capable of efficiently utilizing resources of a plurality of virtual machines in a hypervisor and a display apparatus for vehicles including the same.

### 2. Description of the Related Art

A vehicle is an apparatus that a driver moves in a desired direction. A representative example of the vehicle is a car.

Meanwhile, a display apparatus for vehicles is located in the vehicle for convenience of users who use the vehicle.

For example, a display is disposed in a cluster in order to display various kinds of information. Meanwhile, in order to display vehicle driving information, various displays, such as an audio video navigation (AVN) display, are located in the vehicle, in addition to the cluster.

In this manner, when controlling a plurality of displays from a signal processing device, the possibility of the system being temporarily suspended increases due to a temporary overload of the processor within the signal processing device.

In particular, if the system is temporarily suspended while displaying vehicle information or map information, there is a disadvantage in that it has a significant impact on vehicle driving.

### SUMMARY

An object of the present disclosure is to provide a signal processing device capable of efficiently utilizing a signal processing device, and a vehicle display device equipped with the same.

Another object of the present disclosure is to provide a signal processing device capable of efficiently utilizing resources of a plurality of virtual machines within a hypervisor, and a vehicle display device equipped with the same.

A further object of the present disclosure is to provide a signal processing device capable of stably operating without pause in the operation within the signal processing device, and a vehicle display device equipped with the same.

In accordance with an aspect of the present disclosure, the above and other objects can be accomplished by the provision of a signal processing device including a processor and a graphics processor configured to perform signal processing for a display mounted in a vehicle, wherein the processor is configured to execute a server virtual machine and a plurality of guest virtual machines on a hypervisor in the processor, and execute a workload balance server to control display off, frame rate variation, or image resolution variation based on workload data received from the plurality of guest virtual machines.

The workload balance server can receive workload data from workload balance clients executed within the plurality of guest virtual machines and execute to control display off, frame rate variation, or image resolution variation based on workload data.

The workload balance server can be configured to turn off the display in response to a determination which a display corresponding to one of the plurality of guest virtual machines is unused based on workload data received from the plurality of guest virtual machines.

The workload balance server can be configured to change a frame rate of a display corresponding to at least one guest virtual machine among the plurality of guest virtual machines in response to a usage rate of the processor or the graphics processor being greater than or equal to a first allowable value.

In response to the usage rate of the processor or the graphics processor being greater than or equal to a second allowable value greater than the first allowable value, the workload balance server can be configured to change resolution of an image processed in at least one guest virtual machine among the plurality of guest virtual machines.

In response to the usage rate of the processor or the graphics processor being greater than or equal to the second allowable value, which is greater than the first allowable value, the workload balance server can decrease the usage rate for preventing an error in an application executed on the processor.

In response to the usage rate of the processor of one guest virtual machine among the plurality of guest virtual machines being less than a reference value and a usage rate of the processor of another guest virtual machine being greater than or equal to a first allowable value, the workload balance server can decrease the usage rate of the processor of the other guest virtual machine and increase the usage rate of the processor of one guest virtual machine to reach the reference value.

In response to the usage rate of the processor or the graphics processor being greater than or equal to the first allowable value, the workload balance server can be configured to change a frame rate of an image processed in at least one guest virtual machine according to priorities of the plurality of applications executed on at least one of the plurality of guest virtual machines.

In response to the usage rate of the processor or the graphics processor being greater than or equal to the first allowable value, the workload balance server can be configured to change a frame rate of an image processed in at least one guest virtual machine based on priority of a plurality of applications executed in at least one guest virtual machine among the plurality of guest virtual machines.

The workload balance server can be executed within the hypervisor.

The workload balance server can be executed within the server virtual machine.

In response to the usage rate of the processor or the graphics processor being greater than or equal to the first allowable value, the workload balance server or the server virtual machine can check free resources of the plurality of guest virtual machines, and in response to the free resource of at least one of the plurality of guest virtual machines being greater than or equal to a set value, the workload balance server or the server virtual machine can share shared processing data using a shared memory with the corresponding guest virtual machine.

The workload balance server or the server virtual machine can receive processed data from the guest virtual machine with which the shared processing data is shared and can control the display of an image based on the processed data.

The workload balance server or the server virtual machine can check the free resources of the plurality of guest virtual machines, and in response to the free resource of at least one of the plurality of guest virtual machines being greater than or equal to the set value, the workload balance server or the server virtual machine can share camera data with the corresponding guest virtual machine using a shared memory.

The workload balance server or the server virtual machine can receive object detection processed data from the guest virtual machine with which the camera data is shared, and can control the display of an image based on the object detection processed data.

In accordance with another aspect of the present disclosure, there is provided a signal processing device including a processor and graphics processor configured to perform signal processing for a display mounted on a vehicle, wherein the processor is configured to execute a server virtual machine and a plurality of guest virtual machines on a hypervisor within the processor and execute a workload balance server to check free resources of the plurality of guest virtual machines based on workload data received from the plurality of guest virtual machines, and in response to the free resource of at least one of the plurality of guest virtual machines being greater than or equal to a set value, the workload balance server or the server virtual machine is configured to share camera data with the corresponding guest virtual machine using a shared memory.

The workload balance server or the server virtual machine can receive the processed data from a guest virtual machine with which shared processing data is shared, and can control the display of an image based on the processed data.

In accordance with another aspect of the present disclosure, there is provided a display apparatus for vehicles, the display apparatus including: a first display and a second display disposed in a vehicle; and a signal processing device including a processor configured to perform signal processing for the first display and the second display, wherein the signal processing device includes: a processor and a graphics processor configured to perform signal processing for a display mounted in a vehicle, wherein the processor is configured to execute a server virtual machine and a plurality of guest virtual machines on a hypervisor in the processor, and is configured to execute a workload balance server to control display off, frame rate variation, or image resolution variation based on workload data received from the plurality of guest virtual machines.

### EFFECTS OF THE DISCLOSURE

The signal processing device according to an embodiment of the present disclosure includes a processor and a graphics processor configured to perform signal processing for a display mounted in a vehicle, wherein the processor is configured to execute a server virtual machine and a plurality of guest virtual machines on a hypervisor in the processor, and execute a workload balance server to control display off, frame rate variation, or image resolution variation based on workload data received from the plurality of guest virtual machines. Accordingly, the signal processing device can be utilized efficiently. In particular, the resources of the plurality of virtual machines within the hypervisor can be utilized efficiently. In addition, the operation within the signal processing device can be stably performed without being suspended.

The workload balance server can receive workload data from workload balance clients executed within the plurality of guest virtual machines and execute to control display off, frame rate variation, or image resolution variation based on the workload data. Accordingly, the signal processing device can be utilized efficiently.

The workload balance server can be configured to turn off the display in response to a determination which a display corresponding to one of the plurality of guest virtual machines is unused based on workload data received from the plurality of guest virtual machines. Accordingly, the signal processing device can be utilized efficiently.

The workload balance server can be configured to change a frame rate of a display corresponding to at least one guest virtual machine among the plurality of guest virtual machines in response to a usage rate of the processor or the graphics processor being greater than or equal to a first allowable value. Accordingly, the signal processing device can be utilized efficiently. Furthermore, the operation within the signal processing device can be stably performed without being suspended.

In response to the usage rate of the processor or the graphics processor being greater than or equal to a second allowable value greater than the first allowable value, the workload balance server can be configured to change resolution of an image processed in at least one guest virtual machine among the plurality of guest virtual machines. Accordingly, the signal processing device can be utilized efficiently. Furthermore, the operation within the signal processing device can be stably performed without being suspended.

In response to the usage rate of the processor or the graphics processor being greater than or equal to the second allowable value, which is greater than the first allowable value, the workload balance server can decrease the usage rate for preventing an error in an application executed on the processor. Accordingly, the signal processing device can be utilized efficiently. Furthermore, the operation within the signal processing device can be stably performed without being suspended.

In response to the usage rate of the processor of one guest virtual machine among the plurality of guest virtual machines being less than a reference value and a usage rate of the processor of another guest virtual machine being greater than or equal to a first allowable value, the workload balance server can decrease the usage rate of the processor of the other guest virtual machine and increase the usage rate of the processor of one guest virtual machine to reach the reference value. Accordingly, the signal processing device can be utilized efficiently. Furthermore, the resources of the plurality of virtual machines can be utilized efficiently.

In response to the usage rate of the processor or the graphics processor being greater than or equal to the first allowable value, the workload balance server can be configured to change a frame rate of an image processed in at least one guest virtual machine according to priorities of the plurality of applications executed on at least one of the plurality of guest virtual machines. Accordingly, the signal processing device can be utilized efficiently. Furthermore, the resources of the plurality of virtual machines can be utilized efficiently.

In response to the usage rate of the processor or the graphics processor being greater than or equal to the first allowable value, the workload balance server can be configured to change a frame rate of an image processed in at least one guest virtual machine based on priority of a plurality of applications executed in at least one guest virtual machine among the plurality of guest virtual machines. Accordingly, the signal processing device can be utilized efficiently. Furthermore, the resources of the plurality of virtual machines can be utilized efficiently.

The workload balance server can be executed within the hypervisor. Accordingly, the resources of the plurality of virtual machines can be efficiently utilized through the hypervisor.

The workload balance server can be executed within the server virtual machine. Accordingly, through server virtual machines, the resources of the plurality of virtual machines can be utilized efficiently.

In response to the usage rate of the processor or the graphics processor being greater than or equal to the first allowable value, the workload balance server or the server virtual machine can check free resources of the plurality of guest virtual machines, and in response to the free resource of at least one of the plurality of guest virtual machines being greater than or equal to a set value, the workload balance server or the server virtual machine can share shared processing data using a shared memory with the corresponding guest virtual machine. Accordingly, the signal processing device can be utilized efficiently. Furthermore, the resources of the plurality of virtual machines can be utilized efficiently.

The workload balance server or the server virtual machine can receive processed data from the guest virtual machine with which the shared processing data is shared and can control the display of an image based on the processed data. Accordingly, the signal processing device can be utilized efficiently. Furthermore, the resources of the plurality of virtual machines can be utilized efficiently.

The workload balance server or the server virtual machine can check the free resources of the plurality of guest virtual machines, and in response to the free resource of at least one of the plurality of guest virtual machines being greater than or equal to the set value, the workload balance server or the server virtual machine can share camera data with the corresponding guest virtual machine using a shared memory. Accordingly, the signal processing device can be utilized efficiently. Furthermore, the resources of the plurality of virtual machines can be utilized efficiently.

The workload balance server or the server virtual machine can receive object detection processed data from the guest virtual machine with which the camera data is shared, and can control the display of an image based on the object detection processed data. Accordingly, the signal processing device can be utilized efficiently. Furthermore, the resources of the plurality of virtual machines can be utilized efficiently.

In accordance with another aspect of the present disclosure, there is provided a signal processing device including a processor and graphics processor configured to perform signal processing for a display mounted on a vehicle, wherein the processor is configured to execute a server virtual machine and a plurality of guest virtual machines on a hypervisor within the processor and execute a workload balance server to check free resources of the plurality of guest virtual machines based on workload data received from the plurality of guest virtual machines, and in response to the free resource of at least one of the plurality of guest virtual machines being greater than or equal to a set value, the workload balance server or the server virtual machine is configured to share camera data with the corresponding guest virtual machine using a shared memory. Accordingly, the signal processing device can be utilized efficiently. Furthermore, the resources of the plurality of virtual machines can be utilized efficiently.

The workload balance server or the server virtual machine can receive the processed data from a guest virtual machine with which shared processing data is shared, and can control the display of an image based on the processed data. Accordingly, the signal processing device can be utilized efficiently. Furthermore, the resources of the plurality of virtual machines can be utilized efficiently.

In accordance with another aspect of the present disclosure, there is provided a display apparatus for vehicles, the display apparatus including: a first display and a second display disposed in a vehicle; and a signal processing device including a processor configured to perform signal processing for the first display and the second display, wherein the signal processing device includes: a processor and a graphics processor configured to perform signal processing for a display mounted in a vehicle, wherein the processor is configured to execute a server virtual machine and a plurality of guest virtual machines on a hypervisor in the processor, and is configured to execute a workload balance server to control display off, frame rate variation, or image resolution variation based on workload data received from the plurality of guest virtual machines. Accordingly, the signal processing device can be utilized efficiently. In particular, the resources of the plurality of virtual machines within the hypervisor can be utilized efficiently. In addition, the operation within the signal processing device can be stably performed without being suspended.

### BRIEF DESCRIPTION OF THE DRAWINGS

FIG. 1A is a view illustrating an example of the exterior and interior of a vehicle;
FIG. 1B is a view illustrating another example of the interior of the vehicle;
FIG. 2 is a view illustrating the external appearance of a display apparatus for vehicles according to an embodiment of the present disclosure;
FIG. 3 illustrates an example of an internal block diagram of the display apparatus for vehicles of FIG. 2;
FIG. 4 is a view illustrating a system driven in a signal processing device related to the present disclosure;
FIG. 5 is a view illustrating an example of a system driven in a signal processing device according to the present disclosure;
FIG. 6 is a view illustrating another example of the system driven in the signal processing device according to the present disclosure;
FIG. 7 is a view illustrating another example of the system driven in the signal processing device according to the present disclosure;
FIGS. 8 to 9B are views referred to in the description of FIG. 5;
FIGS. 10A to 10B are drawings for reference in the description of the operation of a signal processing device related to the present disclosure.
FIG. 11 is a drawing illustrating an example of a system driven by a signal processing device according to an embodiment of the present disclosure.
FIGS. 12A to 12C are drawings illustrating various examples of a system driven by a signal processing device according to an embodiment of the present disclosure.
FIG. 13 is a flowchart illustrating an example of an operating method of a signal processing device of the present disclosure.
FIGS. 14 to 17B are drawings for reference in the description of FIG. 13.
FIG. 18 is a flowchart illustrating another example of an operating method of a signal processing device of the present disclosure.
FIGS. 19A and 19B are drawings for reference in the description of FIG. 20.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

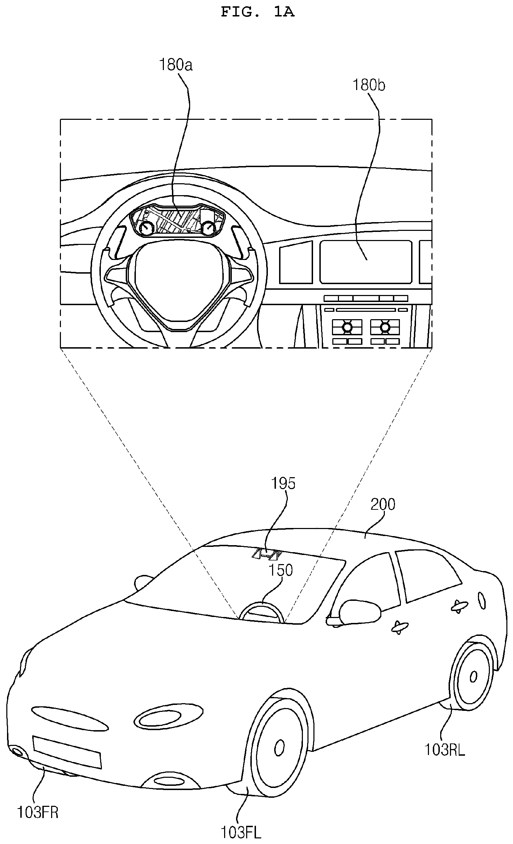

FIG. 1A is a view illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

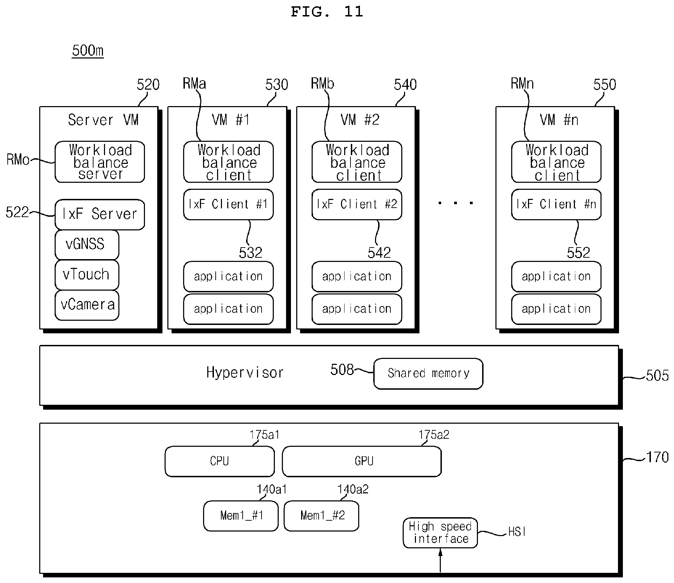

The embodiment of the present disclosure proposes a scheme for a display apparatus 100 for vehicles including a plurality of displays 180a and 180b to efficiently utilize resource. This will be described with reference to FIG. 11 and subsequent figures.

Meanwhile, the vehicle 200 described in this specification can be a concept including all of a vehicle having an engine as a power source, a hybrid vehicle having an engine and an electric motor as a power source, and an electric vehicle having an electric motor as a power source.

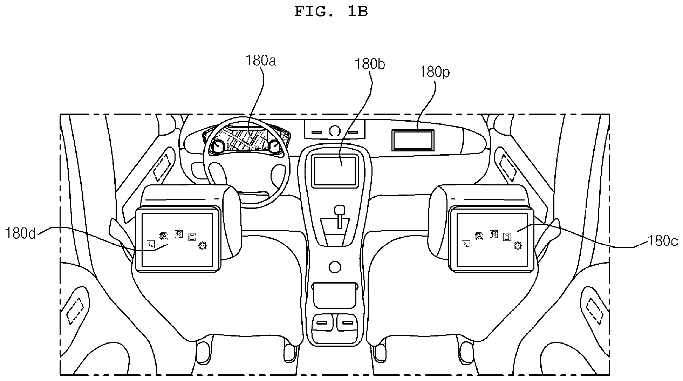

FIG. 1B is a view illustrating another example of the interior of the vehicle.

Referring to the figure, a cluster display 180a, an audio video navigation (AVN) display 180b, a co-driver display 180P, rear seat entertainment (RSE) displays 180c and 180d, and a rear-view mirror display (not shown) can be located in the vehicle.

The embodiment of the present disclosure proposes a scheme for the display apparatus 100 for vehicles including a plurality of displays 180a to 180d and 180p to efficiently utilize resource of a plurality of virtual machines. This will be described with reference to FIG. 11 and subsequent figures.

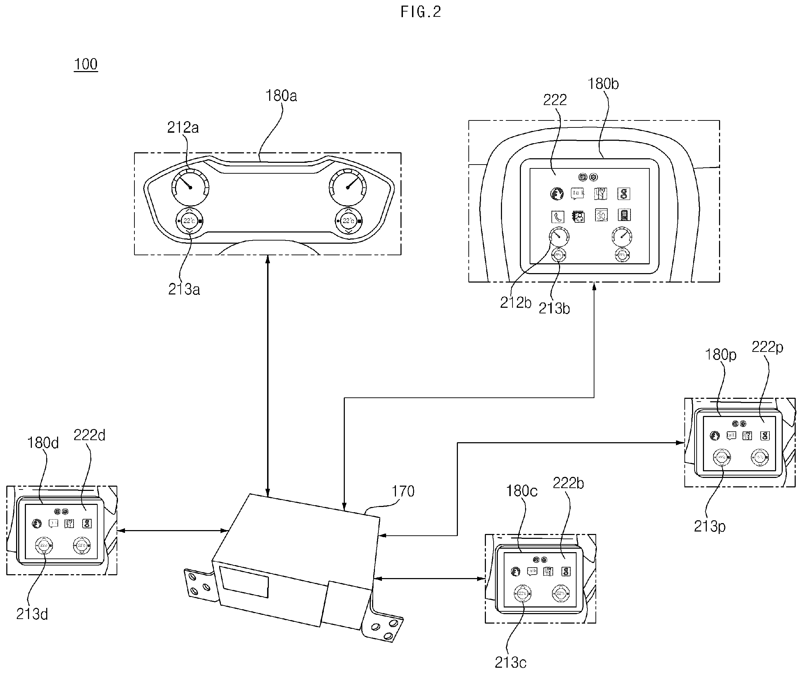

FIG. 2 is a view illustrating the external appearance of a display apparatus for vehicles according to an embodiment of the present disclosure.

The display apparatus 100 for vehicles according to the embodiment of the present disclosure can comprise a plurality of displays 180a to 180d and 180p and a signal processing device 170 configured to perform signal processing in order to display images and information on the plurality of displays 180a to 180d and 180p.

The first display 180a, which is one of the plurality of displays 180a to 180d and 180p, can be a cluster display 180a configured to display a driving state and operation information, and the second display 180b can be an audio video navigation (AVN) display 180b configured to display vehicle driving information, a navigation map, various kinds of entertainment information, or an image.

Among the plurality of displays 180a to 180d and 180p, the third display 180c and the fourth display 180d can be rear seat entertainment (RSE) displays 180c and 108d for displaying driving status information, simple navigation information, various entertainment information or images, and among the plurality of displays 180a to 180d and 180p, the fifth display 180p can be a co-driver display (CDD) 180p for displaying vehicle driving information, a navigation map, various entertainment information or images.

The signal processing device 170 can have a processor 175 provided therein, and a plurality of virtual machines 520 to 550 can be executed on a hypervisor 505 in the processor 175.

For example, the plurality of virtual machines 520 to 550 can be a first virtual machine to a fourth virtual machine 520 to 550.

The first virtual machine 520 can be a server virtual machine and control the second virtual machine to the fourth virtual machines 530 to 550, which are guest virtual machines.

The second virtual machine 530, which is a first guest virtual machine, can operate for the first display 180a, the third virtual machine 540, which is a second guest virtual machine, can operate for the second display 180b, and the fourth virtual machine 550, which is a third guest virtual machine, can operate for the fifth display 180p.

Meanwhile, the first virtual machine 520 in the processor 175 can be configured to set a shared memory 508 based on the hypervisor 505 for transmission of the same data to the second virtual machine 530 and the third virtual machine 540. Consequently, the first display 180a and the second display 180b in the vehicle can display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle can divide and process data.

Meanwhile, the first virtual machine 520 in the processor 175 can receive and process wheel speed sensor data of the vehicle, and can transmit the processed wheel speed sensor data to at least one of the second virtual machine 530 or the third virtual machine 540. Consequently, at least one virtual machine can share the wheel speed sensor data of the vehicle.

Meanwhile, the signal processing device 170 can further execute a fourth virtual machine or a fifth virtual machine (not shown), which are guest virtual machines, in addition to the first to third virtual machines 520 to 540, on the hypervisor 505 in the processor 175 to control the RSE displays 180c and 180d.

Consequently, it is possible to control various displays 180a to 180d and 180p using a single signal processing device 170.

Meanwhile, some of the plurality of displays 180a to 180d and 180p can be operated based on a Linux Operating System (OS), and others can be operated based on a Web Operating System (OS).

In the case in which touch is input to any one of the displays 180a and 180a to 180d and 180p configured to be operated under various operating systems, the signal processing device 170 according to the embodiment of the present disclosure can be configured to process the touch input rapidly and accurately.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a home screen 222b including a plurality of applications and an in-vehicle temperature indicator 213c is displayed on the third display 180c, a third home screen 222d including a plurality of applications and an in-vehicle temperature indicator 213d is displayed on the fourth display 180d, and a fourth home screen 222p including a plurality of applications and an in-vehicle temperature indicator 213p is displayed on the fifth display 180p.

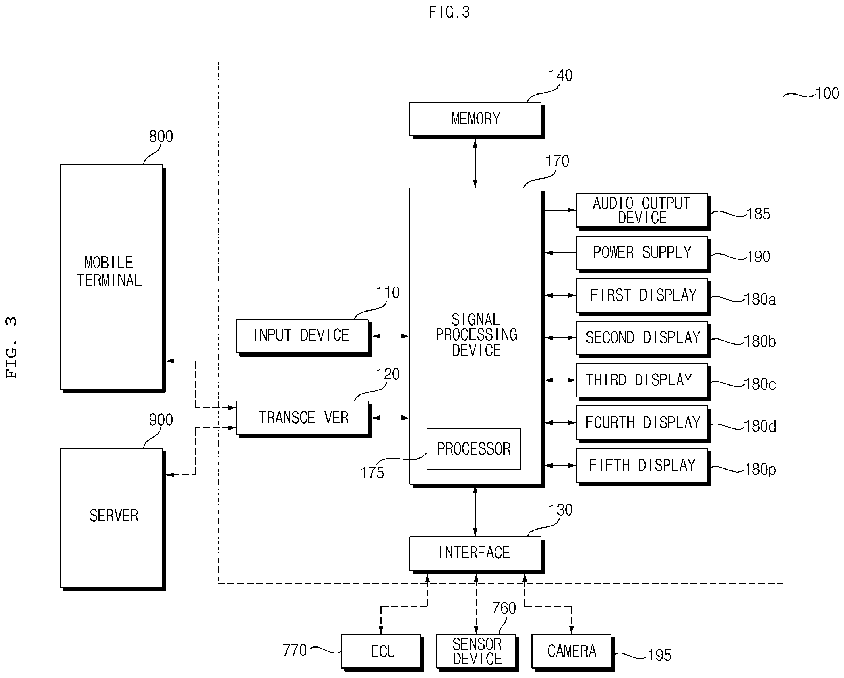

FIG. 3 illustrates an example of an internal block diagram of the display apparatus for vehicles according to the embodiment of the present disclosure.

Referring to the figure, the display apparatus 100 for vehicles according to the embodiment of the present disclosure can comprise an input device 110, a communicator 120, an interface 130, a memory 140, a signal processing device 170, a plurality of displays 180a to 180d and 180p, an audio output device 185, and a power supply 190.

The input device 110 can comprise a physical button or pad for button input or touch input.

Meanwhile, the input device 110 can comprise a touch sensor (not shown) configured to sense touch input to the displays 180a to 180d and 180p.

Meanwhile, the input device 110 can comprise a microphone (not shown) for user voice input.

The communicator 120 can wirelessly exchange data with a mobile terminal 800 or a server 900.

In particular, the communicator 120 can wirelessly exchange data with a mobile terminal of a vehicle driver. Any of various data communication schemes, such as Bluetooth, Wi-Fi, Wi-Fi Direct, and APIX, can be used as a wireless data communication scheme.

The communicator 120 can receive weather information and road traffic situation information, such as transport protocol expert group (TPEG) information, from the mobile terminal 800 or the server 900. To this end, the communicator 120 can comprise a mobile communication module (not shown).

The interface 130 can receive sensor information from an electronic control unit (ECU) 770 or a sensor device 760, and can transmit the received information to the signal processing device 170.

Here, the sensor information can comprise at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information can be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module can comprise a GPS module configured to receive GPS information.

Meanwhile, the interface 130 can receive front-of-vehicle image data, side-of-vehicle image data, rear-of-vehicle image data, and obstacle-around-vehicle distance information from a camera 195 or lidar (not shown), and can transmit the received information to the signal processing device 170.

The memory 140 can store various data necessary for overall operation of the display apparatus 100 for vehicles, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can comprise a speaker.

The power supply 190 can supply power necessary to operate components under control of the signal processing device 170. In particular, the power supply 190 can receive power from a battery in the vehicle.

The signal processing device 170 can control overall operation of each device in the display apparatus 100 for vehicles.

For example, the signal processing device 170 can comprise a processor 175 configured to perform signal processing for the displays 180a to 180d and 180p.

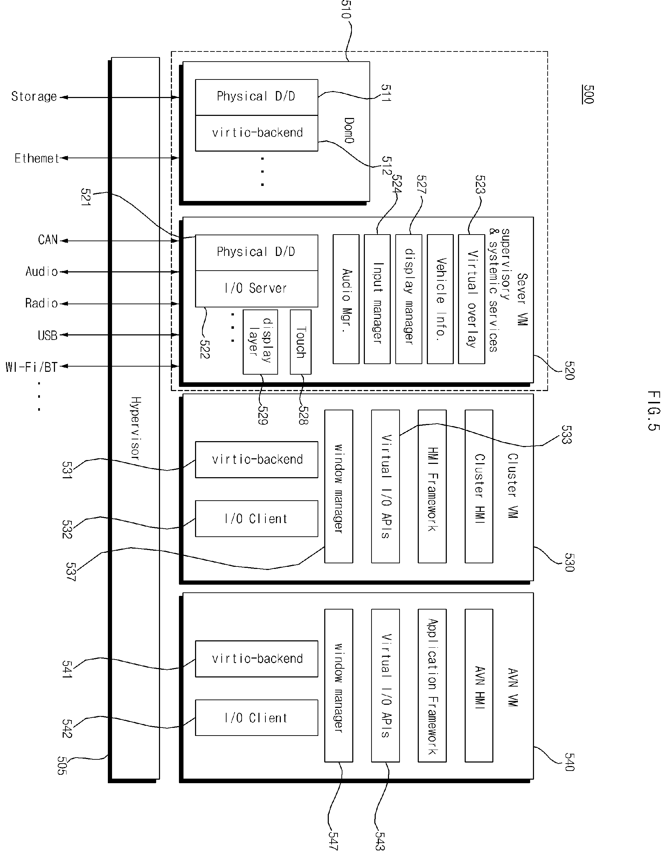

The processor 175 can execute the first to third virtual machines 520 to 540 on the hypervisor 505 (see FIG. 5) in the processor 175.

Meanwhile, the processor 175 can further execute a legacy virtual machine configured to receive and process Ethernet data. For example, as shown in FIG. 5, the legacy virtual machine 510 can be executed by the first virtual machine 520 in the processor 175.

Among the first to third virtual machines 520 to 540 (see FIG. 5), the first virtual machine 520 can be called a server virtual machine, and the second and third virtual machines 530 and 540 can be called guest virtual machines.

The second virtual machine 530 can be operated for the first display 180a, and the third virtual machine 540 can be operated for the second display 180b.

For example, the first virtual machine 520 in the processor 175 can receive, process, and output vehicle sensor data, position information data, camera image data, audio data, or touch input data. Data processed only by a legacy virtual machine and data processed by the first virtual machine 520 can be distinguished from each other, whereby data processing can be efficiently performed. In particular, the first virtual machine 520 can process most of the data, whereby 1:N data sharing can be achieved.

As another example, the first virtual machine 520 can directly receive and process can communication data, audio data, radio data, USB data, and wireless communication data for the second and third virtual machines 530 and 540.

The first virtual machine 520 can transmit the processed data to the second and third virtual machines 530 and 540.

Consequently, only the first virtual machine 520, among the first to third virtual machines 520 to 540, can receive communication data and external input data, and can perform signal processing, whereby load in signal processing by the other virtual machines can be reduced and 1:N data communication can be achieved, and therefore synchronization at the time of data sharing can be achieved.

Meanwhile, the first virtual machine 520 writes some of data in a first shared memory (not shown) to be transmitted to the second virtual machine 530, and writes some other of data in the first shared memory (not shown) to be transmitted to the third virtual machine 540. The second virtual machine 530 and the third virtual machine 540 can be configured to process the received data, and write the processed data in a second shared memory (not shown). Consequently, it is possible to efficiently utilize resource of the plurality of virtual machines in the hypervisor.

At this time, data can be any one of image data, audio data, navigation data, and voice recognition data.

Meanwhile, the first virtual machine 520 can process some other of data, and can be configured to write the processed data in the second shared memory (not shown). That is, the first virtual machine 520 can perform data processing in addition to the second virtual machine 530 and the third virtual machine 540.

Meanwhile, in response to a fourth virtual machine 550 configured to be operated for the third display 180c being executed in the processor 175, the first virtual machine 520 can write some other of data in the first shared memory (not shown), and the fourth virtual machine 550 can process the received data and can be configured to write the processed data in the second shared memory (not shown).

Meanwhile, the first virtual machine 520 can generate command queues for distributed processing of data in the second virtual machine 530 and the third virtual machine 540. Consequently, the plurality of virtual machines can divide and process data.

Meanwhile, in response to the second virtual machine 530 and the third virtual machine 540 sharing the same data, the first virtual machine 520 in the processor 175 can generate one command queue. Consequently, the same data can be synchronized and shared.

Meanwhile, the first virtual machine 520 can generate command queues corresponding to the number of virtual machines for distributed processing of data.

Meanwhile, the first virtual machine 520 can be configured to transmit at least some of data to at least one of the second virtual machine 530 or the third virtual machine 540 for distributed processing of data.

For example, the first virtual machine 520 can allocate the first shared memory (not shown) for transmitting at least some of data to at least one of the second virtual machine 530 or the third virtual machine 540, and image data processed by the second virtual machine 530 or the third virtual machine 540 can be written in the second shared memory (not shown).

Meanwhile, the first virtual machine 520 can be configured to write data in the shared memory 508, whereby the second virtual machine 530 and the third virtual machine 540 share the same data.

For example, the first virtual machine 520 can be configured to write radio data or wireless communication data in the shared memory 508, whereby the second virtual machine 530 and the third virtual machine 540 share the same data. Consequently, 1:N data sharing can be achieved.

Eventually, the first virtual machine 520 can process most of the data, whereby 1:N data sharing can be achieved.

Meanwhile, the first virtual machine 520 in the processor 175 can be configured to set the shared memory 508 based on the hypervisor 505 in order to transmit the same data to the second virtual machine 530 and the third virtual machine 540.

That is, the first virtual machine 520 in the processor 175 can transmit the same data to the second virtual machine 530 and the third virtual machine 540 in a synchronized state using the shared memory 508 based on the hypervisor 505. Consequently, the plurality of displays 180a and 180b in the vehicle can display the same images in a synchronized state.

Meanwhile, the signal processing device 170 can process various signals, such as an audio signal, an image signal, and a data signal. To this end, the signal processing device 170 can be implemented in the form of a system on chip (SOC).

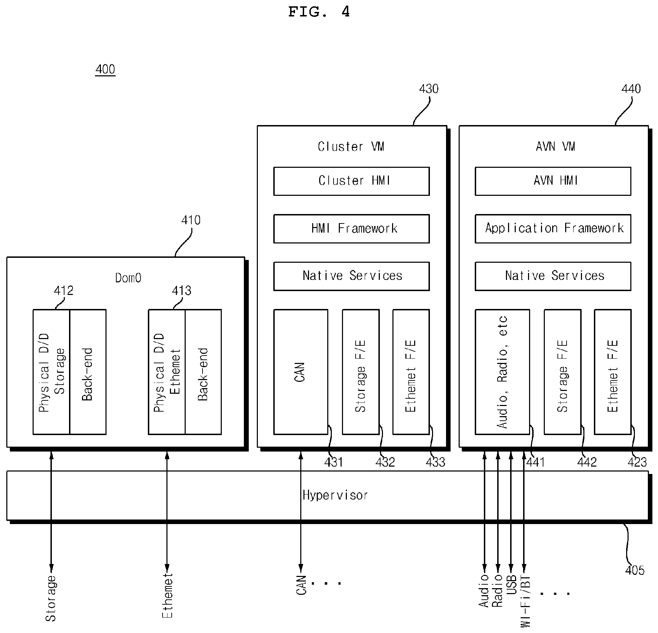

FIG. 4 is a view illustrating a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 can comprise an interface 412 for data communication with the memory 140 and an interface 413 for Ethernet communication.

Meanwhile, the cluster virtual machine 430 can comprise an interface 431 for can communication, an interface 432 for communication with the interface 412 of the legacy virtual machine 410, and an interface 433 for communication with the interface 413 of the legacy virtual machine 410.

Meanwhile, the AVN virtual machine 440 can comprise an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that can communication data are input and output only in the cluster virtual machine 430, whereby the can communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must comprise the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike

FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view illustrating an example of a system driven in a signal processing device according to the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 can be a virtual machine for the cluster display 180a, and the third virtual machine 540 can be a virtual machine for the AVN display 180b.

That is, the second virtual machine 530 and the third virtual machine 540 can be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 can comprise an interface 511 for data communication with the memory 140 and Ethernet communication.

The figure illustrates that the interface 511 is a physical device driver; however, various modifications are possible.

Meanwhile, the legacy virtual machine 510 can further comprise a virtio-backend interface 512 for data communication with the second and third virtual machines 530 and 540.

The first virtual machine 520 can comprise an interface 521 for input and output of audio data, radio data, USB data, and wireless communication data and an input and output server interface 522 for data communication with the guest virtual machines.

That is, the first virtual machine 520, which is a server virtual machine, can provide inputs/outputs (I/O) difficult to virtualize with standard virtual technology (VirtIO) to a plurality of guest virtual machines, such as the second and third virtual machines 530 and 540.

Meanwhile, the first virtual machine 520, which is a server virtual machine, can control radio data and audio data at a supervisor level, and can provide the data to a plurality of guest virtual machines, such as the second and third virtual machines 530 and 540.

Meanwhile, the first virtual machine 520, which is a server virtual machine, can process vehicle data, sensor data, and surroundings-of-vehicle information, and can provide the processed data or information to a plurality of guest virtual machines, such as the second and third virtual machines 530 and 540.

Meanwhile, the first virtual machine 520 can provide supervisory services, such as processing of vehicle data and audio routing management.

Next, the second virtual machine 530 can comprise an input and output client interface 532 for data communication with the first virtual machine 520 and APIs 533 configured to control the input and output client interface 532.

In addition, the second virtual machine 530 can comprise a virtio-backend interface for data communication with the legacy virtual machine 510.

The second virtual machine 530 can receive memory data by communication with the memory 140 or Ethernet data by Ethernet communication from the virtio-backend interface 512 of the legacy virtual machine 510 through the virtio-backend interface.

Next, the third virtual machine 540 can comprise an input and output client interface 542 for data communication with the first virtual machine 520 and APIs 543 configured to control the input and output client interface 542.

In addition, the third virtual machine 540 can comprise a virtio-backend interface for data communication with the legacy virtual machine 510.

The third virtual machine 540 can receive memory data by communication with the memory 140 or Ethernet data by Ethernet communication from the virtio-backend interface 512 of the legacy virtual machine 510 through the virtio-backend interface.

Meanwhile, the legacy virtual machine 510 can be provided in the first virtual machine 520, unlike FIG. 5.

In the system 500, can communication data are input and output only in the first virtual machine 520, but can be provided to a plurality of guest virtual machines, such as the second and third virtual machines 530 and 540, through data processing in the first virtual machine 520. Consequently, 1:N data communication by processing of the first virtual machine 520 can be achieved.

Also, in the system 500 of FIG. 5, audio data, radio data, USB data, and wireless communication data are input and output only in the first virtual machine 520, but can be provided to a plurality of guest virtual machines, such as the second and third virtual machines 530 and 540, through data processing in the first virtual machine 520. Consequently, 1:N data communication by processing of the first virtual machine 520 can be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input can be rapidly and accurately processed. In addition, the touch input can be rapidly and accurately processed even though the number of virtual machines that are driven is increased.

Meanwhile, in the system 500 of FIG. 5, the second and third virtual machines 530 and 540 can be operated based on different operating systems.

For example, the second virtual machine 530 can be operated based on a Linux OS, and the third virtual machine 540 can be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images can be shared in a synchronized state. Eventually, the plurality of displays 180a and 180b can display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input can be rapidly and accurately processed even though the second and third virtual machines 530 and 540 are operated based on different operating systems (OS).

Meanwhile, the first virtual machine 520 can comprise a display manager 527 configured to control overlays displayed on the first display 180a and the second display 180b through the second and third virtual machines 530 and 540, a display layer server 529, and a virtual overlay generator 523 configured to generate a virtual overlay.

The display layer server 529 can receive a first overlay provided by the second virtual machine 530 and a second overlay provided by the third virtual machine 540.

Meanwhile, the display layer server 529 can transmit a virtual overlay generated by the virtual overlay generator 523 to at least one of the second virtual machine 530 or the third virtual machine 540.

Meanwhile, the display manager 527 in the first virtual machine 520 can receive the first overlay provided by the second virtual machine 530 and the second overlay provided by the third virtual machine 540 through the display layer server 529.

The display manager 527 in the first virtual machine 520 can be configured to transmit the virtual overlay, which is different from the first overlay or the second overlay, to at least one of the second virtual machine 530 or the third virtual machine 540 through the display layer server 529.

In response thereto, the second virtual machine 530 can be configured to combine and display the first overlay and the virtual overlay on the first display 180a.

In addition, the third virtual machine 540 can be configured to combine and display the second overlay and the virtual overlay on the second display 180b.

Meanwhile, the first virtual machine 520 can comprise an input manager 524 configured to receive an input signal from the outside. At this time, the input signal can be an input signal from a predetermined button (start button) in the vehicle, a touch input signal, or a voice input signal.

For example, the input manager 524 in the first virtual machine 520 can receive touch input from the first display 180a or the second display 180b.

Meanwhile, the first virtual machine 520 can comprise a touch server 528 configured to transmit information regarding the touch input related to the touch input from the first display 180a or the second display 180b to the second virtual machine 530 or the third virtual machine 540.

For example, in response to touch input corresponding to the first display 180a, the touch server 528 in the first virtual machine 520 can transmit information regarding the touch input to the second virtual machine 530.

Meanwhile, the touch server 528 in the first virtual machine 520 can receive the touch input from the first display 180a or the second display 180b.

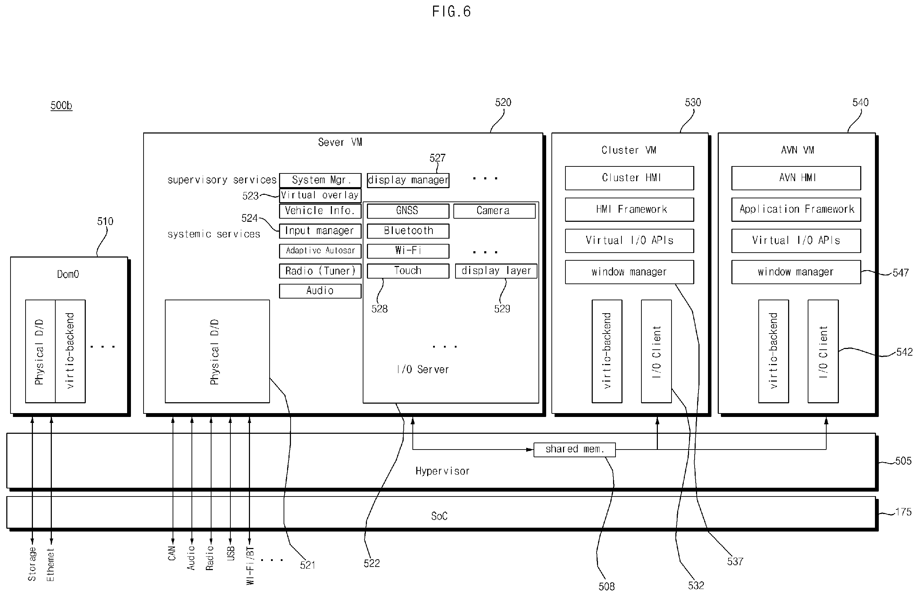

FIG. 6 is a view illustrating another example of the system driven in the signal processing device according to the present disclosure.

Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set he shared memory 508 based on the hypervisor 505 for transmission of data to the second and third virtual machines 530 and 540.

For example, information regarding touch input can be illustrated as the data. Consequently, the information regarding touch input can be transmitted to the second virtual machine 530 or the third virtual machine 540. Eventually, the touch input to the first display 180a or the second display 180b can be rapidly and accurately processed. In addition, the touch input can be rapidly and accurately processed even though the number of virtual machines that are driven is increased.

As another example, image data can be illustrated as the data. Consequently, an image can be displayed on the first display 180a or the second display 180b.

Meanwhile, in response to the same image data being shared in the shared memory 508, the plurality of displays 180a and 180b in the vehicle can display the same data in a synchronized state.

As another example, can communication data, audio data, radio data, USB data, wireless communication data, or position information data can be illustrated as the data. Consequently, information regarding the data can be displayed on the first display 180a or the second display 180b.

Meanwhile, although not shown in FIG. 6, the legacy virtual machine 510 can transmit memory data from the memory 140 or Ethernet data by Ethernet communication to the second and third virtual machines 530 and 540 using the shared memory 508 based on the hypervisor 505. Consequently, information corresponding to the memory data or the Ethernet data can be displayed on the first display 180a or the second display 180b.

Meanwhile, the first virtual machine 520 in the system 500b of FIG. 6 can comprise a display manager 527, a display layer server 529, a virtual overlay generator 523, an input manager 524, and a touch server 528, similarly to the first virtual machine 520 in the system 500 of FIG. 5.

Meanwhile, the input and output server interface 522 in the first virtual machine 520 in the system 500b of FIG. 6 can comprise a display layer server 529 and a touch server 528, unlike FIG. 5.

The operation of the display manager 527, the display layer server 529, the input manager 524, the virtual overlay generator 523, and the touch server 528 is the same to FIG. **5****,** and therefore a description thereof will be omitted.

Meanwhile, the first virtual machine 520 of FIG. 6 can further comprise a system manager for overall system control, a vehicle information manager for vehicle information management, an audio manager for audio control, and a radio manager for radio control.

Meanwhile, the input and output server interface 522 in the first virtual machine 520 in the system 500b of FIG. 6 can further comprise a GNSS server for GPS information input and output, a Bluetooth server for Bluetooth input and output, a Wi-Fi server for Wi-Fi input and output, and a camera server for camera data input and output.

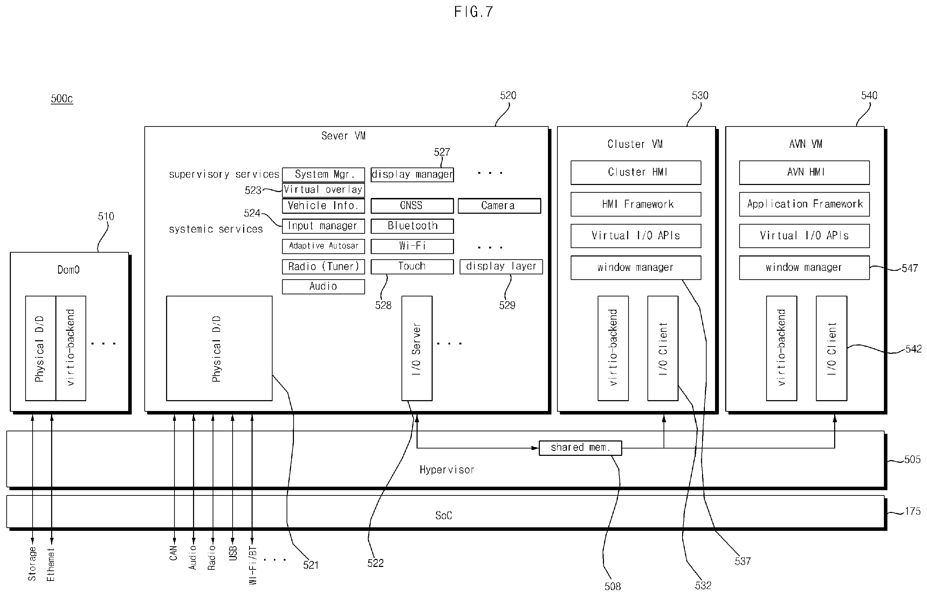

FIG. 7 is a view illustrating a further example of the system driven in the signal processing device according to the present disclosure.

Referring to the figure, the system 500c driven by the processor 175 in the signal processing device of FIG. 7 is similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 can be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output can be provided and executed in the first virtual machine 520 outside the input and output server interface 522, unlike FIG. 6.

That is, the display manager 527, the display layer server 529, the virtual overlay generator 523, the input manager 524, and the touch server 528 can be provided and executed in the first virtual machine 520.

The operation of the display manager 527, the display layer server 529, the virtual overlay generator 523, the input manager 524, and the touch server 528 is the same to FIG. 5, and therefore a description thereof will be omitted.

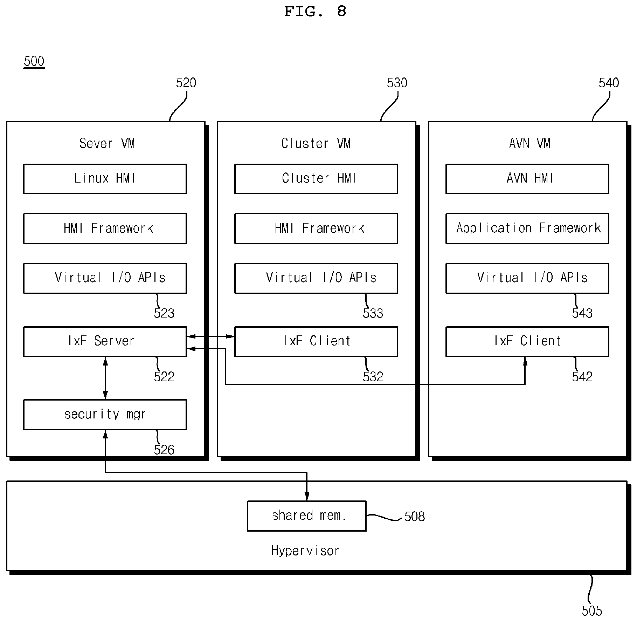

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to set he shared memory 508 based on the hypervisor 505 in order to transmit the same data to the second virtual machine 530 and the third virtual machine 540.

Consequently, the plurality of displays 180a and 180b in the vehicle can display the same images in a synchronized state.

Meanwhile, high-speed data communication can be performed between the plurality of virtual machines. Furthermore, high-speed data communication can be performed even though the plurality of virtual machines is driven by different operating systems.

Meanwhile, the first virtual machine 520 in the processor 175 can not allocate memories corresponding in number to the virtual machines but can use a single shared memory 508, not memory allocation in response to transmitting the data processed by the first virtual machine 520 to another virtual machine. Consequently, 1:N data communication using the shared memory 508, not 1:1 data communication, can be performed between the virtual machines.

Meanwhile, the first virtual machine 520 in the processor 175 can comprise an input and output server interface 522 and a security manager 526.

Meanwhile, the second virtual machine 530 and the third virtual machine 540 can comprise input and output client interfaces 532 and 542, respectively. Consequently, high-speed data communication between the plurality of virtual machines can be performed using the input and output server interface 522 and the input and output client interfaces 532 and 542.

The input and output server interface 522 in the first virtual machine 520 can receive requests for transmission of the same data from the input and output client interfaces 532 and 542 in the second virtual machine 530 and the third virtual machine 540, and can transmit shared data to the shared memory 508 through the security manager 526 based thereon.

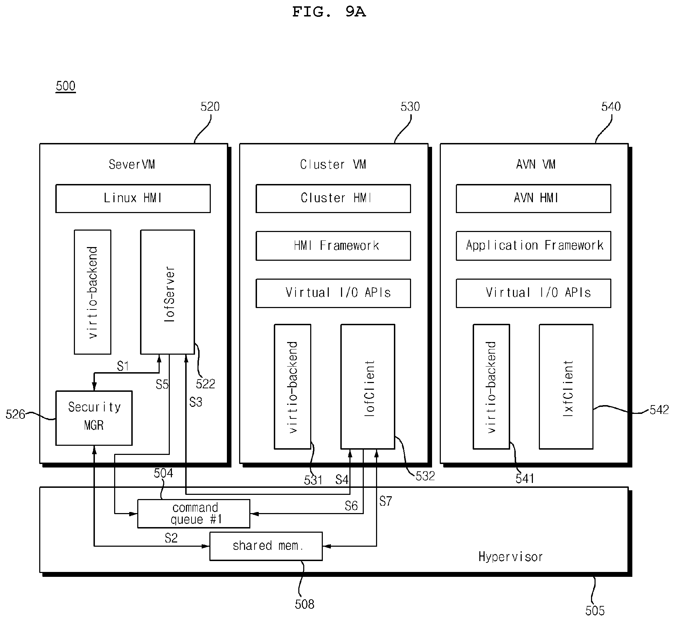

FIG. 9A is a view illustrating transmission of shared data in more detail.

Referring to the figure, in order to transmit shared data, the input and output server interface 522 in the first virtual machine 520 transmits a request for allocation of the shared memory 508 to the security manager 526 (S1).

Subsequently, the security manager 526 can allocate the shared memory 508 using the hypervisor 505 (S2), and can write shared data in the shared memory 508.

Meanwhile, the input and output client interfaces 532 and 542 can transmit a request for connection to the input and output server interface 522 after allocation of the shared memory 508 (S3).

Meanwhile, the input and output server interface 522 transmits information regarding shared memory 508 including key data to the input and output client interfaces 532 and 542 after allocation of the shared memory 508 (S4). At this time, the key data can be private key data for data access.

Meanwhile, the first virtual machine 520 in the processor 175 can transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue can be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues can be the same.

As another example, in response to the commands transmitted to the input and output client interfaces 532 and 542 being different from each other, different command queues can be transmitted to the input and output client interfaces 532 and 542.

Subsequently, the input and output client interfaces 532 and 542 can access the shared memory 508 based on the received key data (S5), and can copy or read the shared data from the shared memory 508 (S7).

Particularly, in response to the input and output client interfaces 532 and 542 receiving the same shared data, the input and output client interfaces 532 and 542 can access the shared memory 508 based on the same command queues and the same key data (S5), and can copy or read the shared data from the shared memory 508.

Consequently, the second virtual machine 530 and the third virtual machine 540 can access the shared memory 508, and can eventually share the shared data.

For example, in the case in which the shared data are image data, the second virtual machine 530 and the third virtual machine 540 can share the image data, and eventually the plurality of displays 180a and 180b in the vehicle can display the same shared images in a synchronized state.

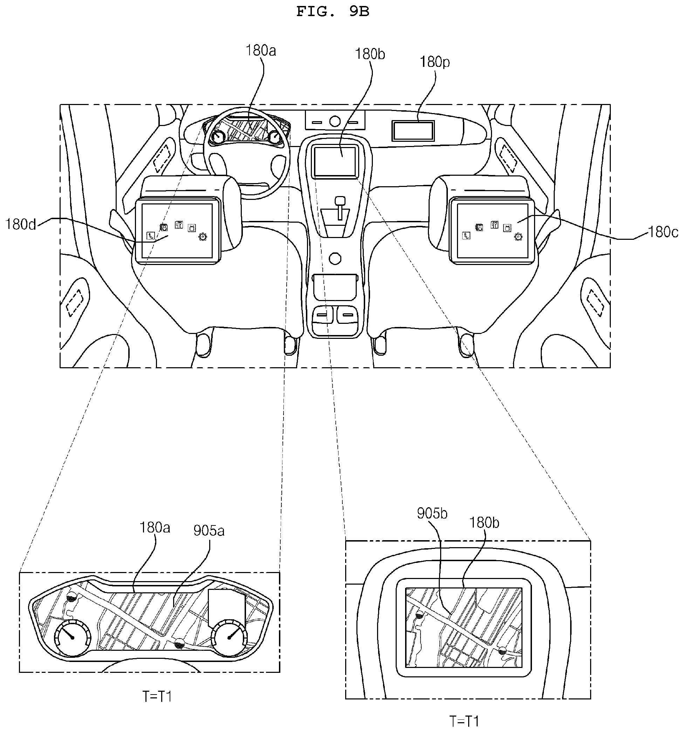

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data can be the same. Consequently, the plurality of displays 180a and 180b in the vehicle can display the same images in a synchronized state.

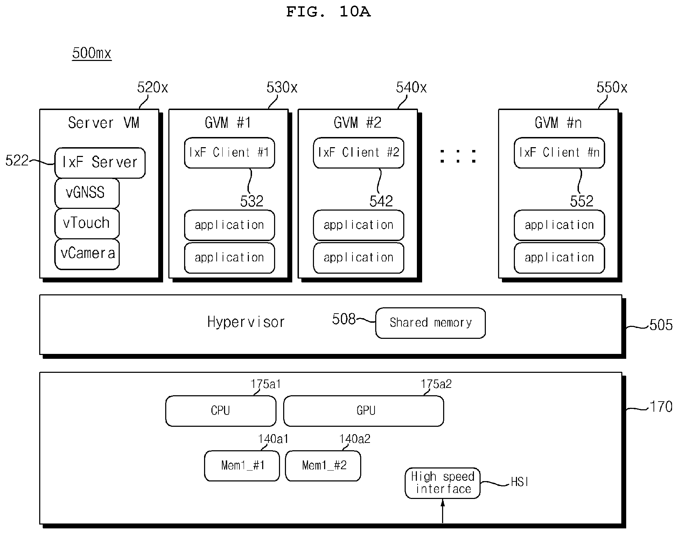

FIGS. 10A to 10B are views referred to in the description of the operation of a signal processing device related to the present disclosure.

FIG. 10A is a view illustrating an example of a system 500mx driven by a signal processing device related to the present disclosure.

According to the system 500mx driven by the signal processing device 170 related to the present disclosure, the signal processing device 170 can include a central processor 175a1, a graphics processor 175a2, a plurality of memories 140a1 and 140a2, and a high-speed interface (HSI) for high-speed data transmission.

The hypervisor 505 can be executed in a central processor 175a1 within the signal processing device 170, and a plurality of virtual machines 520x, 530x, 540x, and 550x can be executed on the hypervisor 505, and a shared memory 508 can be set for data transmission between the plurality of virtual machines 520x, 530x, 540x, and 550x.

A first virtual machine among the plurality of virtual machines 520x, 530x, 540x, and 550x can be a server virtual machine 520x and can execute an input/output server interface 522 for data communication with a guest virtual machine, a location information interface vGNSS for receiving location information, a touch information interface vTouch for receiving touch information, and a camera interface vCamera for receiving camera data.

Each guest virtual machine 530x, 540x, or 550x can execute an application and an input/output client interface 532, 542, and 552 for data communication with the input/output server interface 522.

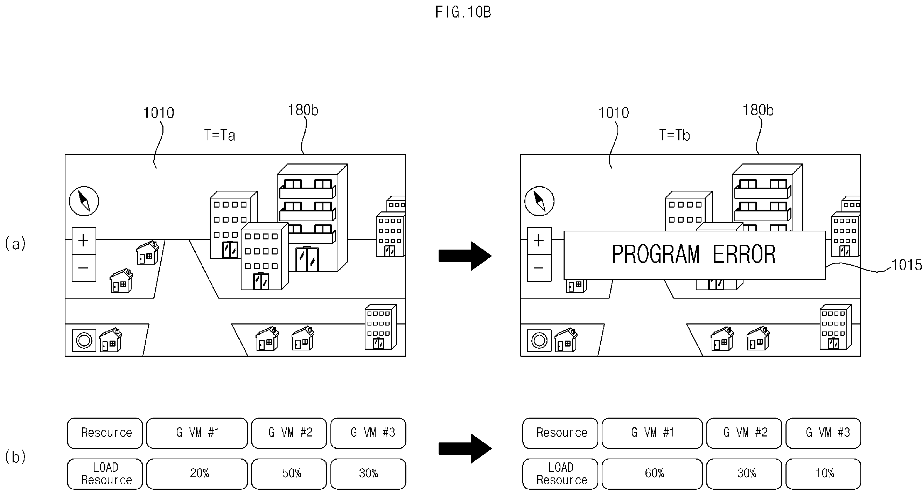

FIG. 10B is a view referred to the description of FIG. 10A.

Referring to the figure, according to the system 500mx executed on the signal processing device 170 of FIG. 10A, at first time point Ta, a navigation screen 1010 including a navigation map can be executed on the second display 180b.

To this end, as shown in the figure, among the guest virtual machine 530x, 540x, and 550x, the second guest virtual machine 540x corresponding to the second display 180b can use approximately 50% of the total resources of the central processor 175a1 or the graphics processor 175a2, the first guest virtual machine 530x can use approximately 20% of the total resources, and the third guest virtual machine 550x can use approximately 30% of the total resources.

Meanwhile, at second time point Tb after first time point Ta, when an application, etc. is executed in the first guest virtual machine 530x and approximately 60% of the total resources are used, the second guest virtual machine 540x can be set to use approximately 30% of the total resources, and the third guest virtual machine 530x can be set to use approximately 10% of the total resources.

Compared to first time point Ta, at second time point Tb, the resource usage of the second guest virtual machine 540x decreases by approximately 20%, so that a navigation screen 1010 including a navigation map can not be displayed smoothly.

Accordingly, as in FIG. 10B, when an object 1015 indicating an error occurrence is displayed on the second display 180b, the execution of the navigation application can be temporarily suspended. In this manner, the temporary suspension of the system 500mx, while displaying the navigation map has a disadvantage in that it significantly affects vehicle driving.

To solve this problem, in the embodiment of the present disclosure, a method of monitoring the resource usage of each virtual machine in the system executed in the signal processing device 170, efficiently distributing the resources to efficiently utilizing the signal processing device is proposed. This is described with reference to FIG. 11 and below.

FIG. 11 is a diagram illustrating an example of a system driven by the signal processing device according to an embodiment of the present disclosure.

Referring to the figure, the signal processing device 170 driving a system 500m according to an embodiment of the present disclosure includes the processor 175 that performs signal processing for a display mounted on a vehicle.

The display mounted on a vehicle can include a cluster display 180a and an AVN display 180b, as shown in FIG. 1B.

The display mounted on a vehicle can further include a passenger seat display 180p or RSE displays180c and 180d.

The processor 175 according to an embodiment of the present disclosure can include a central processor 175a1 and a graphics processor 175a2, as shown in the figure.

The processor 175 according to an embodiment of the present disclosure is configured to execute the hypervisor 505, execute a server virtual machine 520 and a plurality of guest virtual machines 530 to 550 on the hypervisor 505, and execute a workload balance server RMo to turn off the display 180a to 180d and 180p, change a frame rate, or change image resolution based on workload data received from the plurality of guest virtual machines 530 to 550.

Specifically, the central processor 175a1 in the processor 175 according to an embodiment of the present disclosure is configured to execute the hypervisor 505, executes the server virtual machine 520 and the plurality of guest virtual machines 530 to 550 on the hypervisor 505, and execute the workload balance server RMo to turn off the display 180a to 180d and 180p, change a frame rate, or change image resolution based on workload data received from the plurality of guest virtual machines 530 to 550.

According to the operation of the workload balance server RMo, the signal processing device 170 can be efficiently utilized. In particular, the resources of the plurality of virtual machines 520 to 550 within the hypervisor 505 can be efficiently utilized. In addition, the operation within the signal processing device 170 can be stably performed without being suspended.

Meanwhile, the signal processing device 170 can further include, in addition to the central processor 175a1 and the graphics processor 175a2, a plurality of memories 140a1 and 140a2 and a high-speed interface (HSI) for high-speed data transmission.

Meanwhile, some of the plurality of memories (140a1 to 140a4) can be non-volatile memories, and others can be volatile memories.

Meanwhile, the high-speed interface (HSI) can support PCIe, CCIX, or CXL, etc.

Meanwhile, the signal processing device 170 can further include a neural network processor for a neural network processing process, etc.

The hypervisor 505 is executed in the central processor 175a1 within the signal processing device 170, a plurality of virtual machines 520, 530, 540, and 550 can be executed on the hypervisor 505, and a shared memory 508 can be set for data transmission between the plurality of virtual machines 520, 530, 540, and 550.

Meanwhile, among the plurality of virtual machines 520, 530, 540, and 550, a first virtual machine is the server virtual machine 520 and can execute an input/output server interface 522 for data communication with a guest virtual machine, a location information interface vGNSS for receiving location information, a touch information interface vTouch for receiving touch information, and a camera interface vCamera for receiving camera data.

Accordingly, location information, touch information, and camera data can be received from external devices through the server virtual machine 520, and other guest virtual machines 530 to 550 can receive location information, touch information, or camera data through the server virtual machine 520, not through external devices.

The respective guest virtual machine 530, 540, and 550 can execute an application and an input/output client interface 532, 542, and 552 for data communication with the input/output server interface 522.

Meanwhile, the workload balance server RMo can be executed within the server virtual machine 520, as shown in the figure. Accordingly, the resources of the plurality of virtual machines 520 to 550 can be efficiently utilized through the server virtual machine 520.

Meanwhile, the workload balance server RMo can execute the workload balance server RMo to receivee workload data from the workload balance clients RMa to RMn executed in the plurality of guest virtual machines 530 to 550, respectively, and turn off the display 180a to 180d and 180p, change a frame rate, or change image resolution based on the workload data. Accordingly, the signal processing device 170 can be efficiently utilized.

Meanwhile, the workload balance server RMo can turn off the display 180a to 180d and 180p corresponding to one of the plurality of guest virtual machines 530 to 550 in response to a determination which the display is not in use based on the workload data received from the plurality of guest virtual machines 530 to 550. Accordingly, the signal processing device 170 can be efficiently utilized.

Meanwhile, if a usage rate of the central processor 175a1 of any one guest virtual machine among the plurality of guest virtual machines 530 to 550 is less than a reference value while a usage rate of the central processor 175a1 of another guest virtual machine 175a1 is equal to or greater than a first allowable value, the workload balance server RMo can decrease the usage rate of the processor 175a1 the other virtual machine and increase the usage rate of the processor 175a1 of the any one guest virtual machine to reach the reference value. Accordingly, the signal processing device 170 can be utilized efficiently. Furthermore, the resources of the plurality of virtual machines 520 to 550 can be utilized efficiently.

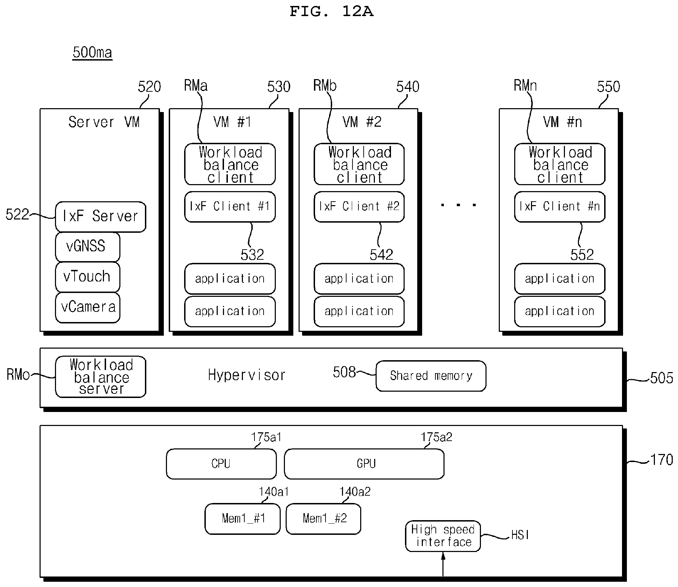

FIGS. 12A to 12C are diagrams illustrating various examples of systems driven by the signal processing device according to an embodiment of the present disclosure.

A system 500ma driven by the signal processing device 170 of FIG. 12A is similar to the system 500m of FIG. 11 but differs in that the workload balance server RMo is executed within the hypervisor 505 rather than within the server virtual machine 520. Accordingly, resources of a plurality of virtual machines 520 to 550 can be efficiently utilized through the hypervisor 505.

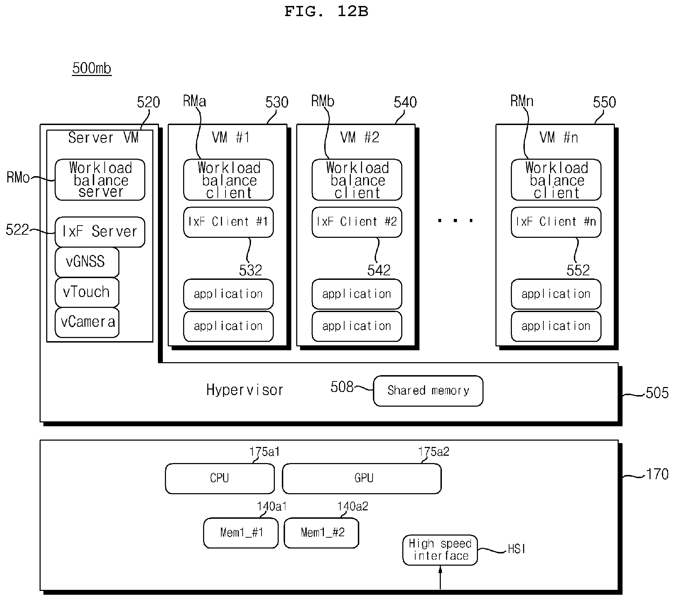

A system 500mb driven by the signal processing device 170 of FIG. 12B is similar to the system 500m of FIG. 11 but differs in that the server virtual machine 520 is executed within the hypervisor 505 rather than on the hypervisor 505.

Meanwhile, the workload balance server RMo can be executed within the server virtual machine 520 executed within the hypervisor 505. Accordingly, the resources of the plurality of virtual machines 520 to 550 can be efficiently utilized through the hypervisor 505.

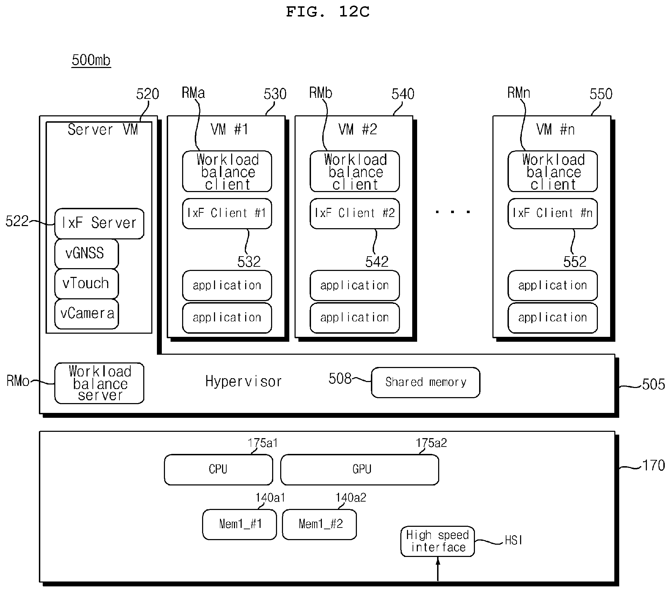

A system 500mc driven by the signal processing device 170 of FIG. 12C is similar to the system 500m of FIG. 11 but differs in that the server virtual machine 520 is executed within the hypervisor 505 rather than on the hypervisor 505.

Meanwhile, the workload balance server RMo can be executed within the hypervisor 505 separately from the server virtual machine 520 executed within the hypervisor 505. Accordingly, the resources of the plurality of virtual machines 520 to 550 can be efficiently utilized through the hypervisor 505.

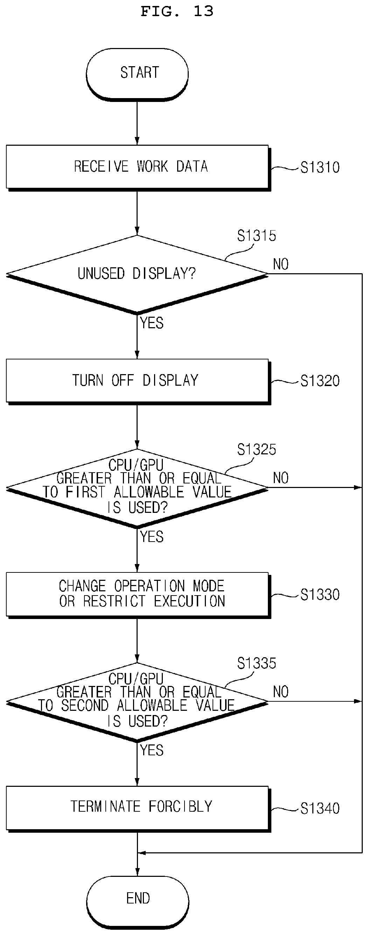

FIG. 13 is a flowchart illustrating an example of an operating method of the signal processing device of the present disclosure.

Referring to the figure, the workload balance server RMo receives workload data from the workload balance clients RMa to RMc in the guest virtual machines 530 to 550 (S1310).

The workload data can include resource usage rate or free resource information of the central processor 175a1 or the graphics processor 175a2 of the respective guest virtual machines 530 to 550.

In addition, the workload data can further include memory 140a1 and 140a2 usage rate or free resource information of the respective guest virtual machines 530 to 550.

Meanwhile, the workload data can further include usage rate or free resource information of a highspeed interface (HSI).

Meanwhile, the workload data from workload balance clients RMa to RMc in the guest virtual machines 530 to 550 can be transmitted to the workload balance server RMo via the shared memory 508. Accordingly, the workload data of the respective guest virtual machines 530 to 550 can be transmitted to the workload balance server RMo quickly and accurately.

The workload balance server RMo determines whether the displays 180a to 180d and 180p corresponding to one of the plurality of guest virtual machines 530 to 550 is unused based on the workload data received from the plurality of guest virtual machines 530 to 550 (S1315), and if so, can control the corresponding display to be turned off (S1320). Accordingly, the signal processing device 170 can be utilized efficiently.

For example, if there is no change in workload data received from a third guest virtual machine among the workload data received from the plurality of guest virtual machines 530 to 550 for a certain period of time, the workload balance server RMo can determine that the passenger display 180p is not in use and can control the passenger display 180p to be turned off.

Specifically, if a home screen including the plurality of applications is displayed on the passenger display 180p and an input signal, such as a touch input, is not received for a certain period of time, the workload balance server RMo can determine that there is no passenger seated in the passenger display 180p and can control the passenger display 180p to be turned off.

As another example, when the workload data received from the third guest virtual machine 550 among the workload data received from the plurality of guest virtual machines 530 to 550 does not change for a certain period of time and a passenger seat seating signal received from a sensor device (not shown) is not received, the workload balance server RMo can determine that the passenger seat display 180p is not in use and can control the passenger seat display 180p to be turned off.

Next, the workload balance server RMo can determine whether the usage rate of the central processor 175a1 or the graphics processor 175a2 is greater than or equal to the first allowable value (S1325), and if so, can be configured to change a frame rate of a display corresponding to at least one guest virtual machine among the plurality of guest virtual machines 530 to 550 to be changed or the execution to be restricted (S1330). Accordingly, the signal processing device 170 can be efficiently utilized. In addition, the operation within the signal processing device 170 can be stably performed without being suspended.

For example, the workload balance server RMo can decrease the frame rate of an image displayed on the cluster display 180a corresponding to the first guest virtual machine 530 when the usage rate of the central processor 175a1 or the graphics processor 175a2 in the third guest virtual machine 550 is greater than or equal to the first allowable value.

Meanwhile, the workload balance server RMo can change the frame rate of an image processed in at least one guest virtual machine, based on the priority of the plurality of guest virtual machines or the plurality of displays executed in at least one of the plurality of guest virtual machines, when the usage rate of the central processor 175a1 or the graphics processor 175a2 in the second guest virtual machine 550 is greater than or equal to the first allowable value.

Meanwhile, the workload balance server RMo can change the frame rate of an image processed in at least one guest virtual machine based on the priorities of the plurality of applications executed in at least one of the plurality of guest virtual machines when the usage rate of the central processor 175a1 or the graphic processor 175a2 is greater than or equal to the first allowable value.

For example, if the priority of the display is the highest for the cluster display 180a and sequentially lowered to the AVN display 180b, the co-driver display 180p, and the RSE displays 180c and 180d, the workload balance server RMo can control the frame rate of the image displayed on the AVN display 180b, the co-driver display 180p, or the RSE displays 180c and 180d to be less than that on the cluster display 180a if the usage rate of the central processor 175a1 or the graphic processor 175a2 in the second guest virtual machine 550 is greater than or equal to the first allowable value.

Specifically, the workload balance server RMo can decrease the frame rate of an image displayed on the RSE displays 180c and 180d if the usage rate of the central processor 175a1 or the graphic processor 175a2 is greater than or equal to the first allowable value at first time point, and also decrease the frame rate of an image displayed on the co-driver display 180p if the usage rate of the central processor 175a1 or the graphic processor 175a2 is greater than or equal to the first allowable value at second time point after first time point.

In addition, if the usage rate of the central processor 175a1 or the graphic processor 175a2 is greater than or equal to the first allowable value even at third time point after second time point, the frame rate of the image displayed on the AVN display 180b can be controlled to decrease, and if the usage rate of the central processor 175a1 or the graphic processor 175a2 is greater than or equal to the first allowable value even at fourth time point after third time point, the frame rate of the image displayed on the cluster display 180a can be controlled to decrease.

Accordingly, the signal processing device 170 can be utilized efficiently. In addition, the resources of the plurality of virtual machines 520 to 550 can be utilized efficiently.

Meanwhile, the workload balance server RMo can set the first allowable value to be different for each guest virtual machine.

For example, the workload balance server RMo can set the first allowable value of the first guest virtual machine 530 with high importance to the highest, and set the first allowable value of the third guest virtual machine 550 with the lowest importance to the lowest.

Accordingly, changing of resolution of the image processed in the first guest virtual machine 530 is performed less than changing of resolution of the image processed in the third guest virtual machine 550. Accordingly, a clearer display is performed for important images.

Next, the workload balance server RMo can determine whether the usage rate of the central processor 175a1 or the graphics processor 175a2 is greater than the second allowable value, which is greater than the first allowable value (S1335), and if so, can change resolution of the image processed in at least one guest virtual machine among the plurality of guest virtual machines 530 to 550 (S1340).

For example, the workload balance server RMo can decrease the resolution of an image processed in at least one guest virtual machine among the plurality of guest virtual machines 530 to 550 when the usage rate of the central processor 175a1 or the graphics processor 175a2 is greater than the second allowable value, which is greater than the first allowable value. Accordingly, the signal processing device 170 can be utilized efficiently. Furthermore, the operation within the signal processing device 170 can be stably performed without being suspended.

Meanwhile, the workload balance server RMo can set the second allowable value to be different for each guest virtual machine.

For example, the workload balance server RMo can set the second allowable value of the first guest virtual machine 530 with high importance to the highest, and set the second allowable value of the third guest virtual machine 550 with the lowest importance to the lowest.

Accordingly, the resolution variation of the image processed in the first guest virtual machine 530 is performed less than changing of the resolution of the image processed in the third guest virtual machine 550. Accordingly, the image processed in important guest virtual machines, etc. is displayed more clearly.

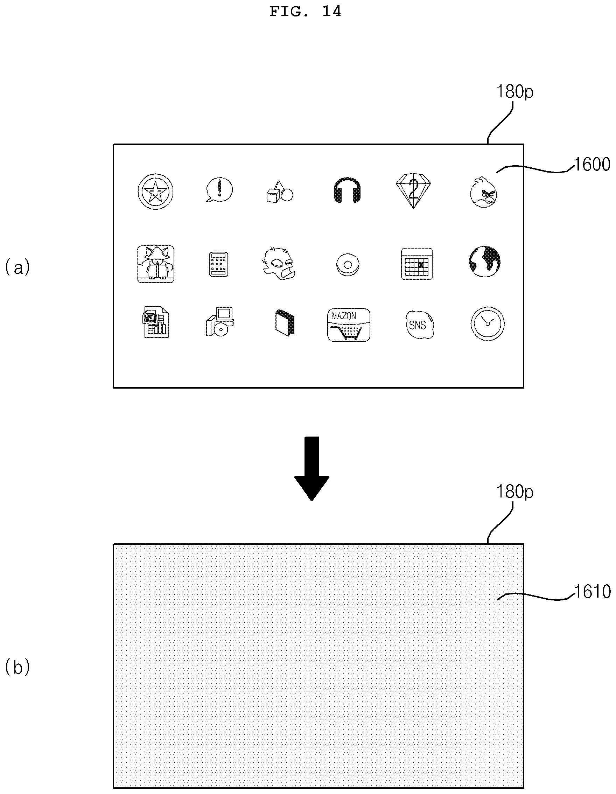

FIGS. 14 to 17B are diagrams referred to the description of FIG. 13.

FIG. 14 illustrates an example in which a home screen 1600 is displayed and then the display 180p is turned off due to the non-use of the passenger seat display 180p among the plurality of displays 180a to 180d and 180p.

Referring to the figure, the workload balance server RMo can turn off the display 180a to 180d and 180p corresponding to one of the plurality of guest virtual machines 530 to 550 based on workload data received from the plurality of guest virtual machines 530 to 550.

In the figure, an example in which an OFF screen 1610 instead of the home screen 1600 is displayed on the passenger seat display 180p is illustrated. Accordingly, the signal processing device 170 can be utilized efficiently.

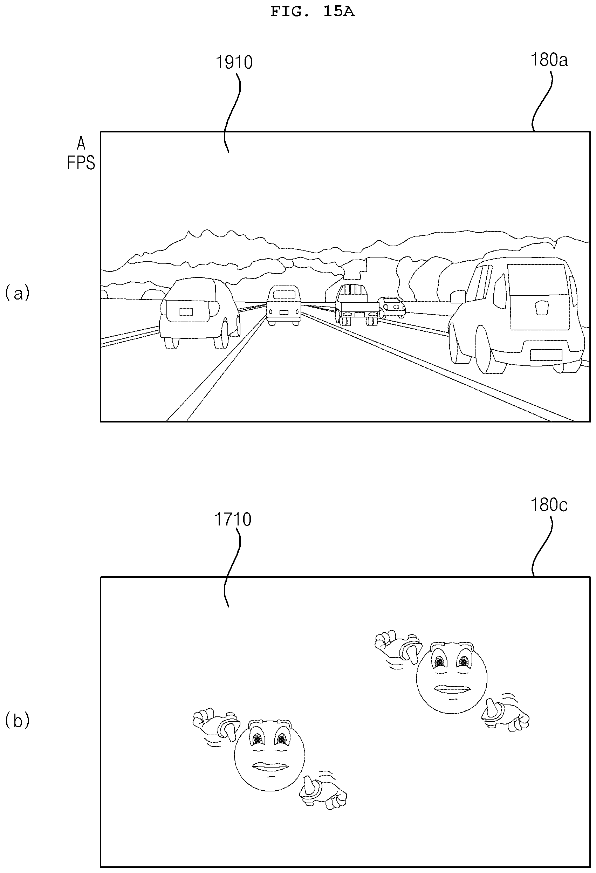

FIG. 15A illustrates a case in which a predetermined image is displayed on each of a plurality of displays 180b and 180c.

Referring to the figure, depending on the operation of the first guest virtual machine 530, a camera screen 1910 can be displayed on the cluster display 180a, and depending on the operation of the fourth guest virtual machine (not shown), a game screen 1710 can be displayed on the RSE display 180c.

At this time, the frame rate of the camera screen 1910 displayed on the cluster display 180a can be an A frame rate.

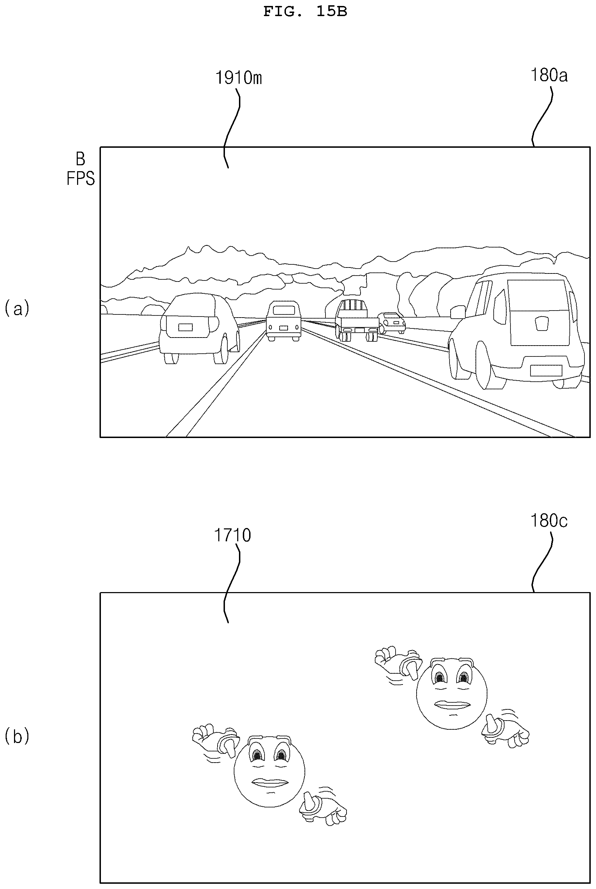

FIG. 15B illustrates that the frame rate of the camera screen 1910 displayed on the cluster display 180a among the plurality of displays 180b and 180c is varied.

Referring to the figure, the workload balance server RMo can determine whether the usage rate of the central processor 175a1 or the graphics processor 175a2 is greater than or equal to the first allowable value, and if so, can change the frame rate of a display corresponding to at least one guest virtual machine among the plurality of guest virtual machines 530 to 550.

For example, the workload balance server RMo can decrease the frame rate of a display corresponding to at least one guest virtual machine among the plurality of guest virtual machines 530 to 550 when the usage rate of the central processor 175a1 or the graphics processor 175a2 is greater than or equal to the first allowable value.

In the figure, the frame rate of a camera screen 1910m processed in the first guest virtual machine 530 is lowered from the A frame rate to a B frame rate under the control of the workload balance server RMo.

Accordingly, the signal processing device 170 can be efficiently utilized. Furthermore, the resources of the plurality of virtual machines 520 to 550 can be efficiently utilized.

Meanwhile, unlike FIG. 15B, under the control of the workload balance server RMo, the frame rate of the camera screen 1910 processed in the first guest virtual machine 530 can remain unchanged, and the frame rate of the game screen 1710 processed in the fourth guest virtual machine (not shown) with a lower priority can decrease. Accordingly, the signal processing device 170 can be efficiently utilized based on the priorities of the plurality of guest virtual machines or the plurality of displays.

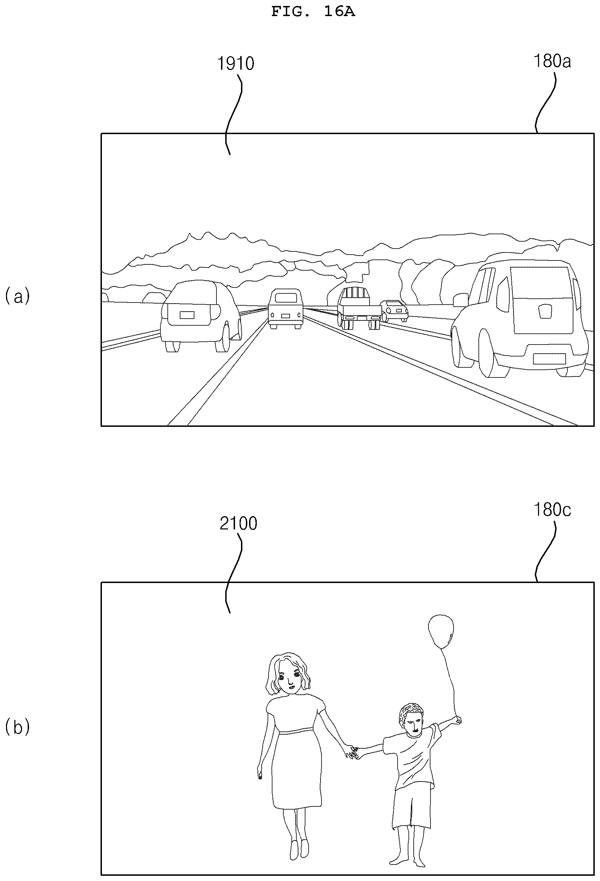

FIG. 16A illustrates a certain image displayed on each of the plurality of displays 180b and 180c.

Referring to the figure, depending on the operation of the second guest virtual machine 540, the navigation screen 1010 can be displayed on the AVN display 180b, and a game screen 2100 can be displayed on the RSE display 180c depending on the operation of the fourth guest virtual machine (not shown).

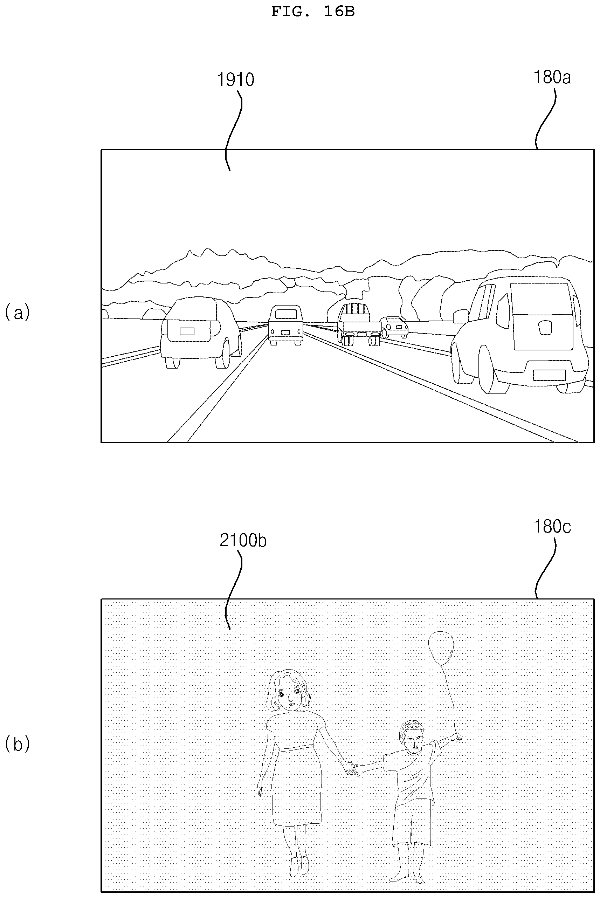

FIG. 16B illustrates that the resolution of a video screen displayed on the RSE display 180c among the plurality of displays 180a and 180c is varied.

Referring to the figure, the workload balance server RMo can determine whether the usage rage of the central processor 175a1 or the graphic processor 175a2 is equal to or greater than the second allowable value, and if so, change the video resolution.

For example, the workload balance server RMo can decrease the resolution of the video screen from a first resolution to a second resolution if the usage rate of the central processor 175a1 or the graphic processor 175a2 is equal to or greater than the second allowable value.

That is, the workload balance server RMo can control to display a video screen 2100b having a lower resolution than the video screen 2100 of FIG. 16a when the usage rate of the central processor 175a1 or the graphic processor 175a2 is greater than or equal to the second allowable value.

To this end, the workload balance server RMo or the server virtual machine 520 can decrease the resolution of the video data streamed from an external server (not shown) .

Specifically, the workload balance server RMo or the server virtual machine 520 can receive video data of a first resolution from an external first server (not shown), and then, when the usage rate of the central processor 175a1 or the graphic processor 175a2 is greater than or equal to the second allowable value, the workload balance server RMo or the server virtual machine 520 can receive video data of a second resolution less than the first resolution from a second server (not shown).

Accordingly, the signal processing device 170 can be efficiently utilized. In addition, the resources of the plurality of virtual machines 520 to 550 can be efficiently utilized.

Meanwhile, the workload balance server RMo can change at least one image in resolution depending on the priority of the display or application when the usage rate of the central processor 175a1 or the graphic processor 175a2 is greater than or equal to the second allowable value.

For example, if the priority of the displays is the highest for the cluster display 180a and sequentially lowered to the AVN display 180b, the co-driver display 180p, and the RSE displays 180c and 180d, the workload balance server RMo can control the resolution of the image displayed on the AVN display 180b, the co-driver display 180p, or the RSE display 180c and 180d to be less than that of the cluster display 180a when the usage rate of the central processor 175a1 or the graphic processor 175a2 in the second guest virtual machine 550 is greater than or equal to the second allowable value.

Specifically, the workload balance server RMo can decrease the resolution of an image displayed on an RSE display 180c and 180d when the usage rate of the central processor 175a1 or the graphic processor 175a2 is greater than or equal to the second allowable value at first time point, and also decrease the resolution of an image displayed on an auxiliary seat display 180p when the usage rate of the central processor 175a1 or the graphic processor 175a2 is greater than or equal to the second allowable value at second time point after first time point.

In addition, if the usage rate of the central processor 175a1 or the graphic processor 175a2 is greater than or equal to the second allowable value even at third time point after second time point, the workload balance server RMo can decrease the resolution of the image displayed on the AVN display 180b, and if the usage rate of the central processor 175a1 or the graphic processor 175a2 is greater than or equal to the second allowable value even at fourth time point after third time point, the workload balance server RMo can decrease the resolution of the image displayed on the cluster display 180a.

Accordingly, the signal processing device 170 can be efficiently utilized. Furthermore, the resources of the plurality of virtual machines 520 to 550 can be efficiently utilized.

Meanwhile, the workload balance server RMo can change the resolution of the image while changing the frame rate of an image displayed on at least one of the plurality of displays when the usage rate of the central processor 175a1 or the graphic processor 175a2 is greater than or equal to the second allowable value.

For example, the workload balance server RMo can decrease the frame rate of an image displayed on the first display among the plurality of displays and can decrease the resolution of an image displayed on the second display when the usage rate of the central processor 175a1 or the graphic processor 175a2 is greater than or equal to the second allowable value.

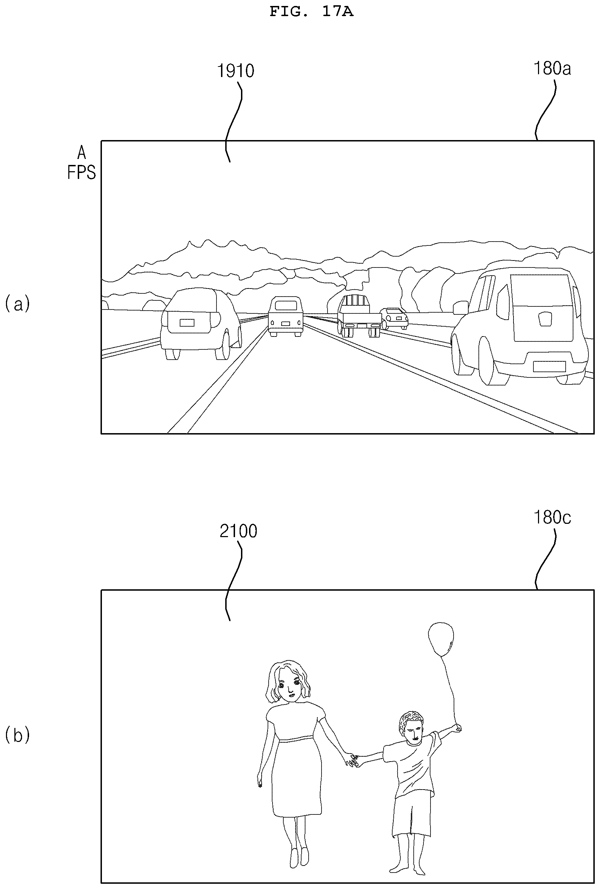

FIG. 17A illustrates an example in which a predetermined image is displayed on each of the plurality of displays 180a and 180c.

Referring to the figure, depending on the operation of the second guest virtual machine 540, a camera screen 1910 can be displayed on the cluster display 180a, and depending on the operation of the fourth guest virtual machine (not shown), a video screen 2100 can be displayed on the RSE display 180c.

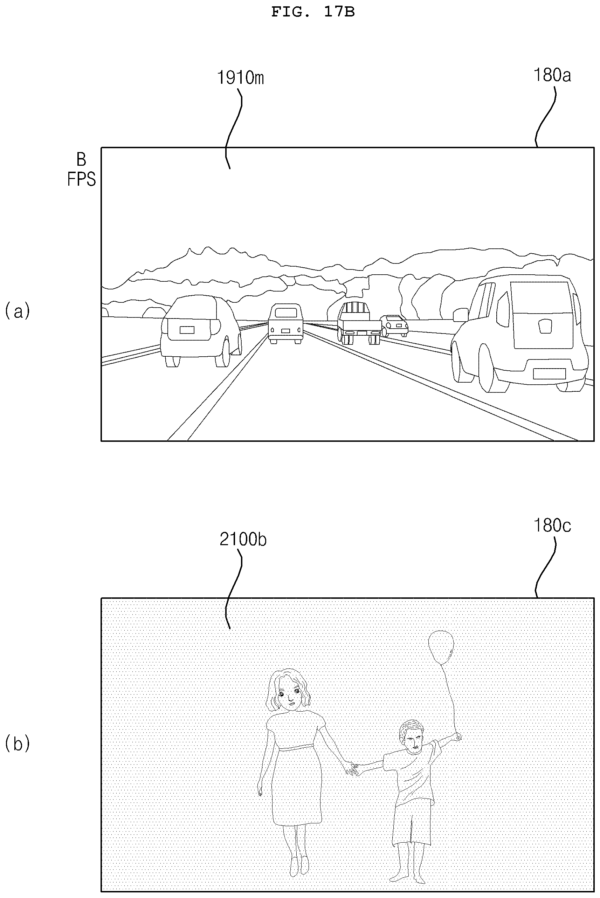

FIG. 17B illustrates that the frame rate of an image displayed on the cluster display 180a among the plurality of displays 180a and 180c is varied and the resolution of an image screen displayed on the RSE display 180c is varied.

Referring to the figure, the workload balance server RMo can determine whether the usage rate of the central processor 175a1 or the graphic processor 175a2 is greater than or equal to the second allowable value, and if so, can decrease the frame rate of the image displayed on the cluster display 180a and can decrease the resolution of the image screen displayed on the RSE display 180c.

Specifically, the camera image 1910m with a B frame rate less than the A frame rate can be displayed on the cluster display 180a, and an image screen 2100b with the second resolution less than the first resolution can be displayed on the RSE display 180c.

Accordingly, the signal processing device 170 can be efficiently utilized. Furthermore, the resources of the plurality of virtual machines 520 to 550 can be efficiently utilized.

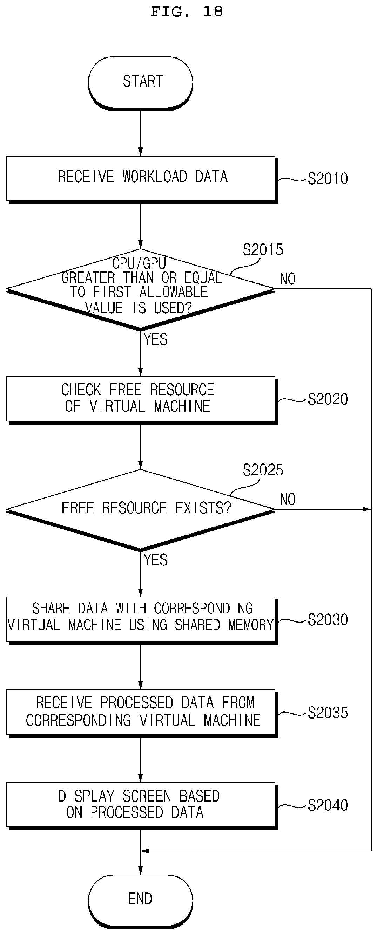

FIG. 18 is a flowchart illustrating another example of an operating method of the signal processing device of the present disclosure.

Referring to the figure, the workload balance server RMo receives workload data from the workload balance clients RMa to RMc within the guest virtual machines 530 to 550 (S2010).

The workload data can include a resource usage rate or free resource information of the central processor 175a1 or the graphics processor 175a2 of the respective guest virtual machines 530 to 550.

In addition, the workload data can further include memory 140a1 and 140a2 usage rate or free resource information of the respective guest virtual machines 530 to 550.

Meanwhile, the workload data can further include usage rate or free resource information of the highspeed interface (HSI).

Meanwhile, workload data from workload balance clients RMa to RMc within guest virtual machines 530 to 550 can be transmitted to the workload balance server RMo via the shared memory 508. Accordingly, the workload data of the respective guest virtual machines 530 to 550 can be transmitted to the workload balance server RMo quickly and accurately.

The workload balance server RMo can determine whether the usage rate of the central processor 175a1 or the graphics processor 175a2 is greater than or equal to the first allowable value based on the workload data received from the plurality of guest virtual machines 530 to 550 (S2015), and if so, can check the free resources of the plurality of guest virtual machines 530 to 550 (S2020).

The free resources at this time can be free resources of each of the plurality of cores within the central processor 175a1 or the graphics processor 175a2.

For example, if the first guest virtual machine 530 uses a first processor core (not shown) of the central processor 175a1, the second guest virtual machine 540 uses a second processor core (not shown) of the central processor 175a1, and the third guest virtual machine 550 uses a third processor core (not shown) of the central processor 175a1, the free resources of the plurality of guest virtual machines 530 to 550 can include free resources of the first processor core, free resources of the second processor core, and free resources of the third processor core.

Meanwhile, unlike the figure, it is also possible to check the free resources of the plurality of guest virtual machines 530 to 550 regardless of whether the usage rate of the central processor 175a1 or the graphics processor 175a2 is greater than or equal to the first allowable value.

Also, the workload balance server RMo can determine whether some guest virtual machines among the plurality of guest virtual machines 530 to 550 have free resources (S2025), and if so, can share shared processing data with the guest virtual machines using the shared memory 508 (S2030).

For example, if some guest virtual machines among the plurality of guest virtual machines 530 to 550 have free resources greater than a set value, the workload balance server RMo can share the shared processing data with the corresponding guest virtual machines using the shared memory 508. Accordingly, the signal processing device 170 can be utilized efficiently. Furthermore, the resources of the plurality of virtual machines 520 to 550 can be utilized efficiently.

For example, the workload balance server RMo or server virtual machine 520 can check the free resources of the plurality of guest virtual machines 530 to 550, and if the free resources of at least one of the plurality of guest virtual machines 530 to 550 are greater than or equal to the set value, the camera data can be shared with the corresponding guest virtual machine using the shared memory 508.

Accordingly, signal processing for object detection in the camera data can be divided and processed.

Meanwhile, the shared data can be ADAS data, lidar data, or radar data in addition to the camera data. Accordingly, the data processing speed can be improved by dividing the data processing.

Meanwhile, the workload balance server RMo or server virtual machine 520 can receive the processed data from the guest virtual machine with which the shared processing data is shared (S2035) and control the display of an image based on the processed data (S2040).

For example, the workload balance server RMo or server virtual machine 520 can receive the object detection processed data from the guest virtual machine with which the camera data is shared and control the display of an image based on the object detection processed data. Accordingly, the signal processing device 170 can be efficiently utilized. Furthermore, the resources of the plurality of virtual machines 520 to 550 can be efficiently utilized.

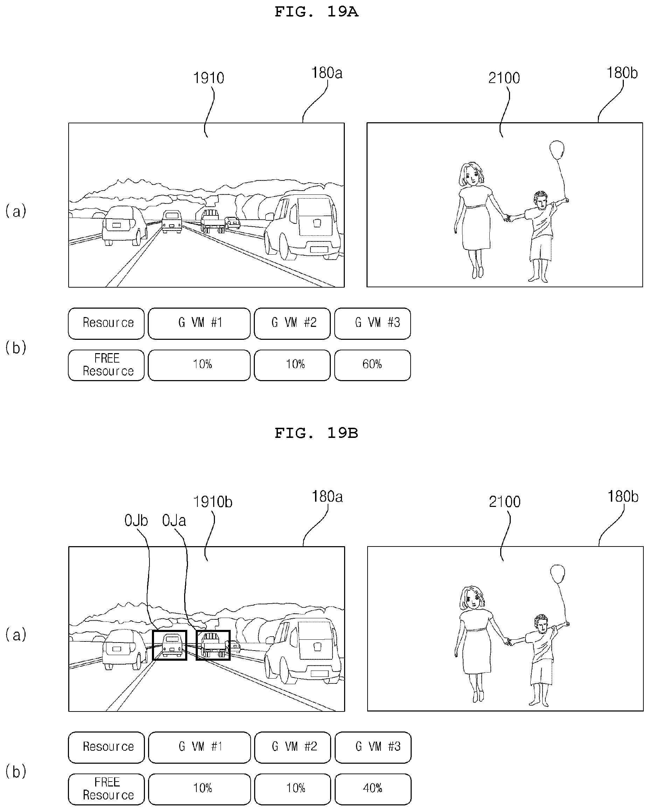

FIGS. 19A and 19B are diagrams referred to the description of FIG. 20.

FIG. 19A illustrates that, at first time point, a camera image 1910 is displayed on the cluster display 180a, and a video 2100 is displayed on the AVN display 180b.

Referring to the figure, according to the system 500m executed on the signal processing device 170 of FIG. 11, camera data from a camera device 195 is received by the server virtual machine 520, and the server virtual machine 520 shares the camera image with the first guest virtual machine 530 using the shared memory 508.

Accordingly, at first time point, the first guest virtual machine 530 can be configured to display the camera image 1910 on the cluster display 180a.

Meanwhile, according to the system 500m executed on the signal processing device 170 of FIG. 11, video data received through the communication unit 120 is received by the server virtual machine 520, and the server virtual machine 520 shares the camera image with the second guest virtual machine 520 using the shared memory 508.

Therefore, at first time point, the second guest virtual machine 540 can control the video 2100 to be displayed on the AVN display 180b.

At this time, as shown in the figure, the free resource of the first guest virtual machine 530 corresponding to the first display 180a among the respective guest virtual machines 530, 540, and 550 can be approximately 10%, the free resource of the second guest virtual machine 540 can be approximately 10%, and the free resource of the third guest virtual machine 550 can be approximately 60%.

For example, the free resources of the first to third processor cores in the central processor 175a1 can be 10%, 10%, and 60%, respectively.

Meanwhile, the workload balance server RMo or server virtual machine 520 can check the free resources of the plurality of guest virtual machines 530 to 550, and since the free resources of the third guest virtual machine 550 among the plurality of guest virtual machines 530 to 550 are approximately 60%, which is more than the set value, the third guest virtual machine 550 can share the camera data using the shared memory 508.

Meanwhile, the third guest virtual machine 550 can perform signal processing on the received camera data using the shared memory 508 to perform object detection.

Also, the third guest virtual machine 550 can share an object detection result with the server virtual machine 520 or the first guest virtual machine 530 using the shared memory 508.

The server virtual machine 520 can transmit data on the object detection result to the first guest virtual machine 530 using the shared memory 508.

Accordingly, the first guest virtual machine 530 can control the display of a camera image 1910b including the object detection results OJa and OJb on the cluster display 180a as shown in FIG. 21B.

FIG. 19B illustrates that, at second time point, the camera image 1910b including the object detection results OJa and OJb is displayed on the cluster display 180a and the video 2100 is displayed on the AVN display 180b.

At this time, as shown in the figure, the free resources of the first guest virtual machine 530 corresponding to the first display 180a among the respective guest virtual machines 530, 540, and 550 can be approximately 10%, the free resources of the second guest virtual machine 540 can be approximately 10%, and the free resources of the third guest virtual machine 550 can be approximately 40%.

For example, the free resources of the first to third processor cores in the central processor 175a1 can be 10%, 10%, and 40%, respectively.

Accordingly, the signal processing device 170 can be efficiently utilized. Furthermore, the resources of the plurality of virtual machines 520 to 550 can be efficiently utilized.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor and a graphics processor configured to perform signal processing for a display mounted in a vehicle,
wherein the processor is configured to execute a server virtual machine and a plurality of guest virtual machines on a hypervisor in the processor, and execute a workload balance server to control display off, frame rate variation, or image resolution variation based on workload data received from the plurality of guest virtual machines.

2. The signal processing device of claim **1,** wherein the workload balance server is configured to receive workload data from workload balance clients executed within the plurality of guest virtual machines and execute to control display off, frame rate variation, or image resolution variation based on workload data.

3. The signal processing device of claim **1,** wherein the workload balance server is configured to turn off the display in response to a determination which a display corresponding to one of the plurality of guest virtual machines is unused based on workload data received from the plurality of guest virtual machine.

4. The signal processing device of claim **1,** wherein the workload balance server is configured to change a frame rate of a display corresponding to at least one guest virtual machine among the plurality of guest virtual machines in response to a usage rate of the processor or the graphics processor being greater than or equal to a first allowable value.

5. The signal processing device of claim 4, wherein, in response to the usage rate of the processor or the graphics processor being greater than or equal to a second allowable value greater than the first allowable value, the workload balance server is configured to change resolution of an image processed in at least one guest virtual machine among the plurality of guest virtual machines.

6. The signal processing device of claim 4, wherein, in response to the usage rate of the processor or the graphics processor being greater than or equal to the second allowable value, which is greater than the first allowable value, the workload balance server is configured to decrease the usage rate for preventing an error in an application executed on the processor.

7. The signal processing device of claim **1,** wherein, in response to the usage rate of the processor of one guest virtual machine among the plurality of guest virtual machines being less than a reference value and a usage rate of the processor of another guest virtual machine being greater than or equal to a first allowable value, the workload balance server is configured to decrease the usage rate of the processor of the other guest virtual machine and increase the usage rate of the processor of one guest virtual machine to reach the reference value.

8. The signal processing device of claim **1,** wherein, in response to the usage rate of the processor or the graphics processor being greater than or equal to the first allowable value, the workload balance server is configured to change a frame rate of an image processed in at least one guest virtual machine based on priority of the plurality of guest virtual machines or a plurality of displays.

9. The signal processing device of claim **1,** wherein, in response to the usage rate of the processor or the graphics processor being greater than or equal to the first allowable value, the workload balance server is configured to change a frame rate of an image processed in at least one guest virtual machine based on priority of a plurality of applications executed in at least one guest virtual machine among the plurality of guest virtual machines.

10. The signal processing device of claim **1,** wherein the workload balance server is executed within the hypervisor.

11. The signal processing device of claim **1,** wherein the workload balance server is executed within the server virtual machine.

12. The signal processing device of claim **1,** wherein, in response to the usage rate of the processor or the graphics processor being greater than or equal to the first allowable value, the workload balance server or the server virtual machine is configured to check free resources of the plurality of guest virtual machines, and
wherein in response to the free resource of at least one of the plurality of guest virtual machines being greater than or equal to a set value, the workload balance server or the server virtual machine is configured to share shared processing data using a shared memory with the corresponding guest virtual machine.

13. The signal processing device of claim 12, wherein the workload balance server or the server virtual machine is configured to receive processed data from the guest virtual machine with which the shared processing data is shared and control the display of an image based on the processed data.

14. The signal processing device of claim **1,** wherein the workload balance server or the server virtual machine is configured to check the free resources of the plurality of guest virtual machines, and
wherein in response to the free resource of at least one of the plurality of guest virtual machines being greater than or equal to the set value, the workload balance server or the server virtual machine is configured to share camera data with the corresponding guest virtual machine using a shared memory.

15. The signal processing device of claim 14, wherein the workload balance server or the server virtual machine is configured to receive object detection processed data from the guest virtual machine with which the camera data is shared, and control the display of an image based on the object detection processed data.

16. A signal processing device comprising a processor and graphics processor configured to perform signal processing for a display mounted on a vehicle,
wherein the processor is configured to execute a server virtual machine and a plurality of guest virtual machines on a hypervisor within the processor and execute a workload balance server to check free resources of the plurality of guest virtual machines based on workload data received from the plurality of guest virtual machines, and
wherein in response to the free resource of at least one of the plurality of guest virtual machines being greater than or equal to a set value, the workload balance server or the server virtual machine is configured to share camera data with the corresponding guest virtual machine using a shared memory.

17. The signal processing device of claim 16, wherein the workload balance server or the server virtual machine is configured to receive the processed data from a guest virtual machine with which shared processing data is shared, and control the display of an image based on the processed data.

18. A display apparatus for vehicles, the display apparatus comprising:
a first display and a second display disposed in a vehicle; and
a signal processing device comprising a processor and a graphics processor configured to perform signal processing for the first display and the second display,
wherein the signal processing device comprises the signal processing device of any one of claims 1 to 17.
